# EUROPEAN PATENT APPLICATION

(11) **EP 4 692 569 A2**
(43) Date of publication of application: **11.02.2026**
(21) Application number: 25224084.1
(22) Date of filing: 06.04.2021
(51) Int. Cl.: F16B 5/02

(54) **NUT CONNECTION MECHANISM**

(30) Priority: 11.04.2020 US 202016846283
(62) Divisional of application: 21783965.3
(71) Applicant: Atlas Tube Connections, LLC, Chicago, Illinois 60606 (US)
(72) Inventor: GOLDSTEIN, Edward, Douglaston, NY 11363 (US)
(74) Representative: Atout PI Laplace

(57) **Abstract**

Connection mechanisms utilizing nut restrainers and methods of use are presented, particularly as they apply to high-strength bolted connections for steel structures. Nut restrainers may include a base plate and a cap that accepts insertion of a nut, and may include deformable or removable protrusions that allow the nut and/or a cap to move laterally to accept a bolt that is inserted non-concentrically with the nut. A method of positioning a nut restrainer concentric with a bolt hole accurate to within the radial tolerance of the bolt hole is further disclosed.

## Description

### CROSS-REFERENCE TO RELATED APPLICATIONS

This application claims the benefit of U.S. Application No. 16/846,283 filed on April 11, 2020, which is hereby incorporated by reference in its entirety for all purposes as if fully set forth herein.

### FIELD OF THE DISCLOSED TECHNOLOGY

The disclosed technology relates generally to mechanisms and/or processes for confining nuts against a substrate. More specifically, the disclosed technology relates to mechanisms and/or processes that confine a nut against a portion of a substrate while allowing limited lateral movement of the nut.

Additionally, the disclosed technology relates generally to mechanisms and/or processes for limiting rotational movement of a nut with respect to a substrate. More specifically, the disclosed technology relates generally to mechanisms and/or processes for limiting rotational movement of a nut with respect to a substrate while allowing limited lateral movement of the nut.

### BACKGROUND

In areas such as construction, there is often a need to connect two or more pieces of material using bolts and nuts. However, in cases where access to the pieces of material is available from only one side, traditional methods of bolting cannot be used. The existing methods and products for making one-sided connections are more expensive and labor-intensive than making bolted connections.

Thus, there is a need for a mechanism that allows for pre-placement and pre-attachment of nuts while also preserving erection tolerances by allowing the nuts to have some lateral movement, such that a bolt may be screwed into the nut when access is only available from one side, even in cases where the bolt is initially misaligned with the nut. This and other problems are solved by embodiments of the disclosed technology, as described below.

### SUMMARY OF THE DISCLOSED TECHNOLOGY

One aspect includes a nut restrainer for inserting a nut within the nut restrainer and thereafter affixing the nut restrainer to a substrate plate having two sides, over a bolt hole having a radial tolerance, for subsequent installation of a bolt having a shank and a tip, from the side of the substrate plate opposite the side to which the nut restrainer is affixed, the nut restrainer that includes: a portion of one or more materials formed to define a cavity, and including a top plane disposed away from the substrate plate, and an open end; the cavity configured to accept insertion of a nut, with the portion of one or more materials formed to define the cavity shaped to rotationally restrain the nut, and to include at least one location from which the nut has freedom of movement in any lateral direction equal to at least two times the radial tolerance of the bolt hole; the nut restrainer including one or more nut centering elements that includes one or more portions of removable or deformable material which extend into the cavity, and which are configured to hold the nut in a location from which the nut has freedom of movement in any lateral direction substantially equal to at least two times the radial tolerance of the bolt hole, and which may be removed or deformed so as to no longer extend into the cavity following affixment of the nut restrainer to the substrate plate, thereby allowing the nut to move in any lateral direction to accept the bolt if the bolt is inserted non-concentrically with respect to the nut; where the nut restrainer is configured to prevent escape of the nut from the cavity following affixment to the substrate plate; and where no portion of the nut restrainer prevents direct contact between the nut and the substrate plate, or between the shank of the bolt and either the substrate plate or one or more fastened plates.

Implementations may include one or more of the following features. A method of positioning the nut restrainer concentrically with the bolt hole in the substrate plate accurate to within the radial tolerance of the bolt hole, the method that includes: inserting the nut into the nut restrainer; placing the open end of the nut restrainer in flush contact with the substrate plate, thereby preventing removal of the nut; inserting a bolt from a side of the substrate plate opposite the nut restrainer, through the bolt hole, and binding the bolt with the nut previously inserted into the nut restrainer, so that the bolt and the nut are in snug contact with the substrate plate; affixing the nut restrainer to the substrate plate; and removing the bolt from the nut and withdrawing the bolt from the bolt hole in the substrate plate. The nut restrainer is configured so that the nut is visible from outside of the nut restrainer following affixment to the substrate plate. The cavity defines a substantially equiangular hexagon. The nut centering elements are sufficiently stiff and strong to substantially prevent movement of the nut in all lateral directions when the nut is acted on by a force in any lateral direction with a magnitude not exceeding the magnitude of the force acting on the nut due to gravity, and sufficiently flexible to deform when the nut is acted on by a force in a lateral direction due to contact between the tip of the bolt and the nut, thereby allowing the nut to move in a lateral direction within the nut restrainer to accept the bolt when the bolt is inserted non-concentrically the nut. The cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate. The nut restrainer includes one or more washer centering elements, the washer centering elements that includes: one or more portions of deformable material, which extend into the cavity of the nut restrainer, and hold the washer substantially concentric with the nut restrainer; and the washer centering elements being sufficiently stiff and strong to substantially prevent movement of the washer in all lateral directions when the washer is acted on by a force in any lateral direction with a magnitude not exceeding the magnitude of the force acting on the washer due to gravity, and sufficiently flexible to deform when the washer is acted on by a force in a lateral direction due to contact between the tip of the bolt and the washer, thereby allowing the washer to move in a lateral direction to accept the bolt if the bolt is inserted non-concentrically with respect to the washer. The nut centering elements are made of one or more of foam, cork, rubber, plastic and felt, and a balance of the nut restrainer is made of metal. The nut centering elements are contiguous with a balance of the nut restrainer, and the nut centering elements are configured with a deformability that is attributable to a form and proportioning of the nut centering elements. The nut centering elements are attached to a balance of the nut restrainer with an adhesive. Affixment of the nut restrainer to the substrate plate is by means of welding. The nut centering elements are attached to a balance of the nut restrainer by snapping one or more portions of material that include the nut centering elements into place. The top plane includes a hole to allow the tip of the bolt to pass through the top plane after passing through the nut, the hole being shaped to bind with the one or more portions of material including the nut centering elements, and limit attachment of the one or more portions of material including the nut centering elements to a position from which the nut centering elements hold the nut in a position from which the nut has freedom of movement in any lateral direction substantially equal to at least two times the radial tolerance of the bolt hole. The top plane includes a hole to allow the tip of the bolt to pass through the top plane after passing through the nut. The nut restrainer includes one or more of indentations, protrusions and holes, that indicate one or more preferred locations for affixing the nut restrainer to the substrate plate.

One aspect includes a nut restrainer for inserting a nut within the nut restrainer and thereafter affixing the nut restrainer to a substrate plate having two sides, over a bolt hole having a radial tolerance, for subsequent installation of a bolt having a shank and a tip, from the side of the substrate plate opposite the side to which the nut restrainer is affixed, the nut restrainer that includes: one or more rigid outer portions and a mobile central portion; the mobile central portion formed to define a cavity, and including a top plane disposed away from the substrate plate, and an open end; the cavity configured to accept insertion of a nut, with a material of the mobile central portion that defines the cavity shaped to rotationally restrain the nut; the one or more rigid outer portions, which include portions of the nut restrainer that are affixed to the substrate plate, configured so that the mobile central portion has freedom of movement in any lateral direction substantially equal to at least two times the radial tolerance of the bolt hole; the one or more rigid outer portions and the mobile central portion being connected by one or more flexible connectors, which are sufficiently stiff and strong to substantially prevent movement of the mobile central portion in all lateral directions when one or more of the nut and the mobile central portion are acted on by forces in any lateral direction with magnitudes not exceeding the magnitude of the force acting on a respective element due to gravity, and sufficiently strong to rotationally restrain the mobile central portion when the mobile central portion is acted on by a torque due to an action of tightening the bolt with the nut, and sufficiently flexible to deform when the nut is acted on by a force in a lateral direction due to contact between the tip of the bolt and the nut, thereby allowing the nut to move in a lateral direction to accept the bolt if the bolt is inserted non-concentrically with respect to the nut; where the nut restrainer is configured to prevent escape of the nut from the cavity following affixment to the substrate plate; and where no portion of the nut restrainer prevents direct contact between the nut and the substrate plate, or between the shank of the bolt and either the substrate plate or one or more fastened plates.

Implementations may include one or more of the following features. The nut restrainer where the one or more rigid outer portions include one or more of indentations, protrusions and holes, that indicate one or more preferred locations for affixing the nut restrainer to the substrate plate. The top plane includes a hole to allow the tip of the bolt to pass through the top plane after passing through the nut. Affixment of the nut restrainer to the substrate plate is by means of welding. The cavity defines a substantially regular hexagon. The cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate. A method of positioning the nut restrainer concentrically with the bolt hole in the substrate plate accurate to within the radial tolerance of the bolt hole, the method that includes: inserting the nut into the nut restrainer; placing the open end of the nut restrainer in flush contact with the substrate plate, thereby preventing removal of the nut; inserting a bolt from a side of the substrate plate opposite the nut restrainer, through the bolt hole, and binding the bolt with the nut previously inserted into the nut restrainer, so that the bolt and the nut are in snug contact with the substrate plate; affixing the nut restrainer to the substrate plate; and removing the bolt from the nut and withdrawing the bolt from the bolt hole in the substrate plate.

One aspect includes a nut restrainer for inserting a nut within the nut restrainer and thereafter affixing the nut restrainer to a substrate plate having two faces, over a bolt hole having a radial tolerance, for subsequent installation of a bolt having a shank and a tip, from a side of the substrate plate opposite the side to which the nut restrainer is affixed, the nut restrainer that includes: one or more rigid outer portions and a mobile central portion; the mobile central portion formed to define a cavity, and including a top plane disposed away from the substrate plate, and an open end; the cavity configured to accept insertion of a nut, with a material of the mobile central portion that defines the cavity shaped to rotationally restrain the nut; the mobile central portion further having one or more radial protrusions which extend away from the cavity; the one or more rigid outer portions, which include portions of the nut restrainer that are affixed to the substrate plate, having one or more deformable protrusions, each having a tip; the deformable protrusions configured so that the tips of the deformable protrusions maintain contact with the mobile central portion prior to insertion of the bolt, and hold the mobile central portion in a location from which the mobile central portion has freedom of movement in any lateral direction substantially equal to at least two times the radial tolerance of the bolt hole; the deformable protrusions further being sufficiently stiff and strong to substantially prevent movement of the mobile central portion in all lateral directions when one or more of the nut and the mobile central portion are acted on by forces in any lateral direction with magnitudes not exceeding the magnitude of the force acting on a respective element due to gravity, and being sufficiently flexible to deform when the nut is acted on by a force in a lateral direction due to contact between the tip of the bolt and the nut, thereby allowing the nut to move in a lateral direction to accept the bolt if the bolt is inserted non-concentrically with respect to the nut; the rigid outer portions further having one or more raised elements that are free from contact with the substrate plate, a space between the raised elements and the substrate plate is structured with one or more recesses; the recesses and the radial protrusions of the mobile central portion being configured so that the radial protrusions fit into the recesses, and so that the mobile central portion is rotationally restrained in a counter-clockwise direction when viewed in a direction proceeding from the top plane to the open end, and so that the mobile central portion is prevented from moving away from the face of the substrate plate; where the nut restrainer is configured to prevent escape of the nut from the cavity following affixment to the substrate plate; and where no portion of the nut restrainer prevents direct contact between the nut and the substrate plate, or between the shank of the bolt and either the substrate plate or one or more fastened plates.

Implementations may include one or more of the following features. The nut restrainer where the cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate. A method of positioning the nut restrainer concentrically with the bolt hole in the substrate plate accurate to within the radial tolerance of the bolt hole, the method that includes: inserting the nut into the nut restrainer; placing the open end of the nut restrainer in flush contact with the substrate plate, thereby preventing removal of the nut; inserting a bolt from a side of the substrate plate opposite the nut restrainer, through the bolt hole, and binding the bolt with the nut previously inserted into the nut restrainer, so that the bolt and the nut are in snug contact with the substrate plate; affixing the nut restrainer to the substrate plate; and removing the bolt from the nut and withdrawing the bolt from the bolt hole in the substrate plate. The cavity defines a substantially regular hexagon. Affixment of the nut restrainer to the substrate plate is by means of welding. The top plane includes a hole to allow the tip of the bolt to pass through the top plane after passing through the nut. The raised elements and the deformable protrusions are distinct portions of material. The raised elements and the deformable protrusions that includes a same portion of material. The one or more rigid outer portions are made substantially of metal, and a mobile inner portion is made substantially of plastic. The one or more rigid outer portions include one or more of indentations, protrusions and holes, that indicate one or more preferred locations for affixing the nut restrainer to the substrate plate.

One aspect includes a nut restrainer that includes: a baseplate with a portal therein; a cap within the portal of the baseplate; one or more connectors attached to at least one of the baseplate and the cap; at least one of the connectors being configured to be movable in a lateral direction; and at least one of the connectors being configured to restrain rotation about a vertical axis of the cap with respect to the baseplate.

Implementations may include one or more of the following features. The nut restrainer where the connectors are configured to be deformably movable in a lateral direction. The cap that includes a portal extending through a top of the cap. An interior profile of the cap is shaped to rotationally restrain a nut therein relative to the cap. Colon> the baseplate is structured and arranged to abut against and be attachable to a substrate plate, the substrate plate that includes a portal extending therethrough; and at least one of the connectors is configured to hold the cap abutted against the substrate plate. The interior profile of the cap is shaped to accommodate a circular washer therein, and the circular washer spacing apart the nut and the substrate plate. The baseplate, the cap, and the connectors are configured as a unitary structure, and the connectors that includes deformable flanges. The deformable flanges are parallel and adjacent to the substrate plate. The deformable flanges are configured to be attached at a lower extremity of the baseplate that is adjacent to the substrate plate, and the deformable flanges have a region extending vertically away from the baseplate. Movement of the cap in a lateral direction causes simultaneous deformation of all of the deformable flanges. The cap is insertable into the portal in the baseplate. Movement of the cap in a lateral direction causes movement of at least one of the connectors in a lateral direction. The cap is configured to be insertable into the portal of the baseplate from either side of the baseplate. A top of the cap is a separate portion of material from a sidewall of the cap, the top attachable to the sidewall.

One aspect includes a nut restrainer implementation process that includes: providing a nut restrainer with a baseplate having a portal therein; providing a cap within the portal of the baseplate; providing one or more connectors attached to at least one of the baseplate and the cap; configuring at least one of the connectors being configured to be movable in a lateral direction; and configuring at least one of the connectors being configured to restrain rotation about a vertical axis of the cap with respect to the baseplate.

Implementations may include one or more of the following features. The nut restrainer implementation process may include: extending a bolt through the portal in a substrate plate, tightening the bolt with a nut, placing the nut restrainer over the nut, attaching the nut restrainer to the substrate plate, and removing the bolt. The nut restrainer implementation process may include: configuring the nut restrainer to allow extension of a bolt through the portal in a substrate plate, configuring the nut restrainer to allow tightening of the bolt with a nut, configuring the nut restrainer for placement over the nut, configuring the nut restrainer for attaching the nut restrainer to the substrate plate, and configuring the nut restrainer for removing of the bolt. The connectors are configured to be deformably movable in a lateral direction. The cap that includes a portal extending through a top of the cap. A top of the cap is a separate portion of material from a sidewall of the cap, the top attachable to the sidewall. An interior profile of the cap is shaped to rotationally restrain a nut therein relative to the cap. Colon> the baseplate is structured and arranged to abut against and be attachable to a substrate plate, the substrate plate that includes a portal extending therethrough; and at least one of the connectors is configured to hold the cap abutted against the substrate plate. The interior profile of the cap is shaped to accommodate a circular washer therein, and the circular washer spacing apart the nut and the substrate plate. The baseplate, the cap, and the connectors are a unitary structure, and the connectors that includes deformable flanges. The deformable flanges are parallel and adjacent to the substrate plate. The deformable flanges are attached at a lower extremity of the baseplate that is adjacent to the substrate plate, and the deformable flanges have a region extending vertically away from the baseplate. Movement of the cap in a lateral direction causes simultaneous deformation of all of the deformable flanges. The cap is insertable into the portal in the baseplate. Movement of the cap in a lateral direction causes movement of at least one of the connectors in a lateral direction. The cap is configured to be insertable into the portal of the baseplate from either side of the baseplate.

One aspect includes a nut restrainer configured to receive a nut and be affixed to a substrate plate, the nut restrainer that includes: one or more rigid outer portions and a mobile central portion; the mobile central portion formed to define a cavity, and including a top plane disposed away from the substrate plate, and an open end; the cavity configured to accept insertion of a nut, with a material of the mobile central portion that defines the cavity shaped to rotationally restrain the nut; the mobile central portion further having one or more radial protrusions which extend away from the cavity; the one or more rigid outer portions, which include portions of the nut restrainer that are affixed to the substrate plate, having one or more deformable protrusions, each having a tip; the deformable protrusions configured so that the tips of the deformable protrusions maintain contact with the mobile central portion prior to insertion of a bolt, and hold the mobile central portion in a location from which the mobile central portion has freedom of movement in any lateral direction substantially equal to at least two times a radial tolerance of a bolt hole; the deformable protrusions further being configured to be sufficiently flexible to deform when the nut is acted on by a force in a lateral direction due to contact between the tip of the bolt and the nut, thereby allowing the nut to move in a lateral direction to accept the bolt if the bolt is inserted non-concentrically with respect to the nut; the rigid outer portions further having one or more raised elements that are free from contact with the substrate plate, a space between the raised elements and the substrate plate is structured with one or more recesses; and the recesses and the radial protrusions of the mobile central portion being configured so that the radial protrusions fit into the recesses, and so that the mobile central portion is rotationally restrained.

Implementations may include one or more of the following features. The nut restrainer where the cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate. The cavity defines a substantially regular hexagon. Affixment of the nut restrainer to the substrate plate is by means of welding. The top plane includes a hole to allow the tip of the bolt to pass through the top plane after passing through the nut. The raised elements and the deformable protrusions are distinct portions of material. The raised elements and the deformable protrusions that includes a same portion of material. The one or more rigid outer portions are made substantially of metal, and a mobile inner portion is made substantially of plastic. The one or more rigid outer portions include one or more of indentations, protrusions and holes, that indicate one or more preferred locations for affixing the nut restrainer to the substrate plate.

One aspect includes a nut restrainer configured to receive a nut and be affixed to a substrate, the nut restrainer that includes: a structure configured with a cavity, a top plane, and an open end; the cavity configured to accept insertion of a nut; the cavity further configured and shaped to rotationally restrain the nut and the cavity further configured to include at least one location where the nut has freedom of movement in any lateral direction equal to at least two times a radial tolerance of a bolt hole; and nut centering elements that includes at least one portion of deformable material that extends into the cavity, the at least one portion of deformable material configured to hold the nut in a location from which the nut has freedom of movement in any lateral direction substantially equal to at least two times the radial tolerance of the bolt hole, where the nut restrainer is configured to prevent escape of the nut from the cavity following affixment to a substrate plate.

Implementations may include one or more of the following features. The nut restrainer where the nut restrainer is configured so that the nut is visible from outside of the nut restrainer following affixment to the substrate plate. The cavity defines a substantially equiangular hexagon. The nut centering elements are configured to be sufficiently flexible to deform when the nut is acted on by a force in a lateral direction due to contact between a tip of a bolt and the nut, thereby allowing the nut to move in a lateral direction within the nut restrainer to accept the bolt when the bolt is inserted non-concentrically the nut. The cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate. The nut restrainer may include: at least one washer centering element, the at least one washer centering element that includes: at least one portion of deformable material configured to extend into the cavity of the nut restrainer and hold the washer substantially concentric with the nut restrainer; and the at least one washer centering elements being configured to be sufficiently flexible to deform when the washer is acted on by a force in a lateral direction due to contact between a tip of a bolt and the washer, thereby allowing the washer to move in a lateral direction to accept the bolt if the bolt is inserted non-concentrically with respect to the washer. Colon> the nut centering elements are made of at least one of the following: foam, cork, rubber, plastic and felt; and a balance of the nut restrainer being made of metal. The nut centering elements are attached to the nut restrainer with an adhesive. The structure is configured for affixment to the substrate plate. The structure is configured for affixment to the substrate plate by welding. The nut centering elements are configured to be attached to the structure with a snapping mechanism configured to snap at least one portion of material that includes the nut centering elements into place. The top plane is structured and configured with a hole to allow a tip of a bolt to pass through the top plane after passing through the nut, the hole being configured and shaped to bind with the at least one portion of material including the nut centering elements, and limit attachment of the at least one portion of material including the nut centering elements to a position from which the nut centering elements hold the nut in a position from which the nut has freedom of movement in any lateral direction substantially equal to at least two times the radial tolerance of the bolt hole. The top plane is structured and configured with a hole to allow a tip of a bolt to pass through the top plane after passing through the nut. The nut restrainer includes at least one of the following: indentations configured to indicate preferred locations for affixing the nut restrainer to the substrate plate, protrusions configured to indicate at least one preferred locations for affixing the nut restrainer to the substrate plate, and holes configured to indicate at least one preferred locations for affixing the nut restrainer to the substrate plate.

One aspect includes a nut restrainer implementation process that includes: configuring a nut restrainer with a structure that includes a cavity, a top plane, and an open end; configuring the cavity to accept insertion of a nut; configuring the cavity to rotationally restrain the nut and the cavity further configured to include at least one location where the nut has freedom of movement in any lateral direction equal to at least two times a radial tolerance of a bolt hole; and configuring the nut restrainer with nut centering elements with at least one portion of deformable material that extends into the cavity, the at least one portion of deformable material configured to hold the nut in a location from which the nut has freedom of movement in any lateral direction substantially equal to at least two times the radial tolerance of the bolt hole, where the nut restrainer is configured to prevent escape of the nut from the cavity following affixment to a substrate plate.

Implementations may include one or more of the following features. The nut restrainer implementation process may include configuring the nut restrainer so that the nut is visible from outside of the nut restrainer following affixment to the substrate plate. The cavity defines a substantially equiangular hexagon. The nut restrainer implementation process may include configuring the nut centering elements to be sufficiently flexible to deform when the nut is acted on by a force in a lateral direction due to contact between a tip of a bolt and the nut, thereby allowing the nut to move in a lateral direction within the nut restrainer to accept the bolt when the bolt is inserted non-concentrically the nut. The nut restrainer implementation process may include configuring the cavity to accept insertion of a washer in addition to accepting insertion of the nut, and to provide the washer a freedom of movement in any lateral direction at least equal to the radial tolerance of the bolt hole, and to prevent escape of the washer following affixment to the substrate plate. The nut restrainer implementation process may include: providing at least one washer centering element, the at least one washer centering element that includes: at least one portion of deformable material configured to extend into the cavity of the nut restrainer and hold the washer substantially concentric with the nut restrainer; and the at least one washer centering elements being configured to be sufficiently flexible to deform when the washer is acted on by a force in a lateral direction due to contact between a tip of a bolt and the washer, thereby allowing the washer to move in a lateral direction to accept the bolt if the bolt is inserted non-concentrically with respect to the washer. Colon> the nut centering elements are made of at least one of the following: foam, cork, rubber, plastic and felt; and a balance of the nut restrainer being made of metal. The nut restrainer implementation process may include attaching the nut centering elements to the nut restrainer with an adhesive. The nut restrainer implementation process may include affixing the structure to the substrate plate. The nut restrainer implementation process may include affixing welding the structure to the substrate plate. The nut centering elements are configured to be attached to the structure with a snapping mechanism configured to snap at least one portion of material that includes the nut centering elements into place. The top plane is structured and configured with a hole to allow a tip of a bolt to pass through the top plane after passing through the nut, the hole being configured and shaped to bind with the at least one portion of material including the nut centering elements, and limit attachment of the at least one portion of material including the nut centering elements to a position from which the nut centering elements hold the nut in a position from which the nut has freedom of movement in any lateral direction substantially equal to at least two times the radial tolerance of the bolt hole. The top plane is structured and configured with a hole to allow a tip of a bolt to pass through the top plane after passing through the nut. The nut restrainer includes at least one of the following: indentations configured to indicate preferred locations for affixing the nut restrainer to the substrate plate, protrusions configured to indicate at least one preferred locations for affixing the nut restrainer to the substrate plate, and holes configured to indicate at least one preferred locations for affixing the nut restrainer to the substrate plate. The nut restrainer implementation process may include: inserting the nut into the nut restrainer; placing the open end of the nut restrainer in flush contact with the substrate plate, thereby preventing removal of the nut; inserting a bolt from a side of the substrate plate opposite the nut restrainer, through the bolt hole, and binding the bolt with the nut previously inserted into the nut restrainer, so that the bolt and the nut are in snug contact with the substrate plate; affixing the nut restrainer to the substrate plate; and removing the bolt from the nut and withdrawing the bolt from the bolt hole in the substrate plate. The nut restrainer implementation process may include: configuring the nut restrainer for receiving the nut; configuring the nut restrainer for placing the open end of the nut restrainer in flush contact with the substrate plate, thereby preventing removal of the nut; configuring the nut restrainer for inserting a bolt from a side of the substrate plate opposite the nut restrainer, through the bolt hole, and binding the bolt with the nut previously inserted into the nut restrainer, so that the bolt and the nut are in snug contact with the substrate plate; configuring the nut restrainer for affixing to the substrate plate; and configuring the nut restrainer for removing the bolt from the nut and withdrawing the bolt from the bolt hole in the substrate plate.

A connection mechanism of embodiments of the disclosed technology may have a nut and a bolt, which are rotationally and removably attachable to each other, and a cap. Each of the nut and the bolt may have higher resilience than the cap, through which a cap is insertable into said base plate. The base plate may be configured to be welded to a substrate surface.

"Horizontal" is defined as "an orientation of a plane parallel to a top and/or bottom plane of the base plate" and/or as "an orientation substantially perpendicular to a vertical orientation." "Vertical" is defined as "an orientation of a plane in which the bolt is most elongated when the bolt is screwed into a nut on an opposite side of the base plate" and/or as "an orientation substantially perpendicular to the horizontal orientation." "Resilience" is defined as "a capacity to return to its original shape after being deformed."

The cap may be sized to hold the nut in place relative to the plate while allowing lateral movement of the nut relative to the plate.

In some embodiments, the cap may further surround a washer, which spaces apart the substrate plate and the nut. In various embodiments, each of the base plate and the cap may have a respective plurality of interlockable teeth. The cap, in further embodiments, may be twistable, causing the cap to lock the respective plurality of teeth together with the respective plurality of teeth of the base plate.

In some embodiments, the base plate may have an interlocking mechanism for removably connecting to a second base plate.

The nut, in some embodiments, may be further secured to the substrate plate by way of the bolt, and a portal in the substrate plate may be laterally positioned away from a center of the base plate, causing the bolt to be angled relative to the base plate.

At least one of the cap and the base plate, in various embodiments, may have at least one deformable protrusion. The deformable protrusion deforms, in embodiments, upon insertion of the bolt, through the base plate, into the nut. In other embodiments, the base plate may have at least one deformable protrusion, which may be sized to fit around a plurality of radial flanges emanating from the cap. "Deformable" is defined as "capable of changing its shape without breaking when pushed by typical force of lateral motion of a nut shifting alignment when having a bolt inserted therein."

In another embodiment, the base plate may be functionally attached to the cap. The plate, in this embodiment, may have a rigid outer portion connected to the cap by a plurality of flexible connectors extending therebetween. In other embodiments, the cap may simultaneously be the base plate, and the cap further may have deformable protrusions. "Functionally attached" is defined as "two items attached together in a way in which each piece works together with the other piece to carry out a designed feature and/or designed limited range of motion with respect to one another."

The cap, in further embodiments, may have an upper retainer. The upper retainer may have a central structure with a plurality of prongs extending therefrom. A plurality of flanges may extend from and below a respective prong of the plurality of prongs. The cap further may have a plurality of deformable protrusions. Each hole of a plurality of holes in the cap may be sized to hold a respective flange of the plurality of flanges. The deformable protrusions, in embodiments, are removably attachable to the cap.

In other embodiments, the cap further may have an upper retainer having a central structure with a plurality of prongs extending therefrom. The upper retainer further may have a plurality of flanges extending from and below a respective prong of the plurality of prongs or from and below a respective side of the central structure. Additionally, the cap may have a hole with edges sized to frictionally hold the flanges stationary. The flanges extending from and below a respective prong of the plurality of prongs may be held between a side of the cap and a side of the nut. The plurality of flanges may, in embodiments, be removably attachable to the upper retainer.

"Frictionally" is defined as "relating to the force resisting the relative motion of solid surfaces and/or fluid layers and/or material elements sliding against each other." "Removably attachable" is defined as "capable of being attached and detached without damaging (changing the integrity of the physical structure) the item to which the referenced element was attached and detached."

Any device or step to a method described in this disclosure can comprise or consist of that which it may be a part of, or the parts that make up the device or step. The term "and/or" is inclusive of the items which it joins linguistically and each item by itself.

### BRIEF DESCRIPTION OF THE DRAWINGS

Fig. 1a shows a top perspective view of a nut restrainer of embodiments of the disclosed technology.
Fig. 1b shows a bottom perspective view of the nut restrainer of Fig. 1a.
Fig. 1c shows a bottom perspective view of a nut restrainer of other embodiments of the disclosed technology.
Fig. 2a shows a top plan of the nut restrainer of Fig. 1a with a nut inserted.
Fig. 2b shows a horizontal cross sectional view of the nut restrainer of Fig. 1a with a washer inserted.
Fig. 2c shows another horizontal cross sectional view of the nut restrainer of Fig. 1a.
Fig. 2d shows a horizontal cross sectional view of the nut restrainer of Fig. 1a with a nut inserted.
Fig. 2e shows a front elevational cross-sectional view of the nut restrainer of Fig. 1a.
Fig. 2f shows a front elevational cross-sectional view of the nut restrainer of Fig. 1a with a nut and a washer inserted.
Fig. 3a shows a front elevational cross-sectional view of the nut restrainer of Fig. 1a with a nut, a washer, and a bolt inserted at the moment the nut restrainer is affixed to a substrate plate.
Fig. 3b shows a front elevational cross-sectional view of the nut restrainer of Fig. 1a with a nut, a washer, and a bolt inserted, binding a fastened plate to a substrate plate.
Fig. 4a shows a top perspective view of a nut restrainer and attached removable cover of other embodiments of the disclosed technology.
Fig. 4b shows a bottom perspective view of the nut restrainer and removable cover of Fig. 4a.
Fig. 4c shows a top perspective view of the nut restrainer of Fig. 4a with a removable cover absent.
Fig. 4d shows a bottom perspective view of the removable cover of Fig. 4a.
Fig. 5a shows a top plan of the nut restrainer and removable cover of Fig. 4a.
Fig. 5b shows a top plan of the nut restrainer of Fig. 4a with the removable cover absent and a nut inserted.
Fig. 5c shows a horizontal cross sectional view of the nut restrainer of Fig. 4a with a washer inserted.
Fig. 5d shows another horizontal cross sectional view of the nut restrainer of Fig. 4a with a nut inserted.
Fig. 5e shows a front elevational cross-sectional view of the nut restrainer and removable cover of Fig. 4a with a nut and a washer inserted.
Fig. 6a shows a front elevational cross-sectional view of the nut restrainer and removable cover of Fig. 4a with a nut, a washer, and a bolt inserted at the moment the nut restrainer is affixed to a substrate plate.
Fig. 6b shows a front elevational cross-sectional view of the nut restrainer and removable cover of Fig. 4a with a nut, a washer, and a bolt inserted, binding a fastened plate to a substrate plate.
Fig. 7a shows a top perspective view of a nut restrainer and removable cover of other embodiments of the disclosed technology.
Fig. 7b shows a bottom perspective view of the nut restrainer and removable cover of Fig. 7a.
Fig. 7c shows a top perspective view of the nut restrainer of Fig. 7a with removable cover absent.
Fig. 7d shows a bottom perspective view of the removable cover of Fig. 7a.
Fig. 8a shows a top plan of the nut restrainer and removable cover of Fig. 7a.
Fig. 8b shows a top plan of the nut restrainer of Fig. 7a with the removable cover absent and a nut inserted.
Fig. 8c shows a horizontal cross-sectional view of the nut restrainer of Fig. 7a with a washer inserted.
Fig. 8d shows another horizontal cross-sectional view of the nut restrainer of Fig. 7a with a nut inserted.
Fig. 8e shows a front elevational cross-sectional view of the nut restrainer and removable cover of Fig. 7a with a nut and a washer inserted.
Fig. 9a shows a front elevational cross-sectional view of the nut restrainer and removable cover of Fig. 7a with a nut, a washer, and a bolt inserted at the moment the nut restrainer is affixed to a substrate plate.
Fig. 9b shows a front elevational cross-sectional view of the nut restrainer and removable cover of Fig. 7a with a nut and a washer inserted during insertion of a bolt.
Fig. 9c shows a front elevational cross-sectional view of the nut restrainer and removable cover of Fig. 7a with a nut, a washer, and a bolt inserted, binding a fastened plate to a substrate plate.
Fig. 10a shows a top perspective view of a nut restrainer of other embodiments of the disclosed technology.
Fig. 10b shows a bottom perspective view of the nut restrainer of Fig. 10a.
Fig. 11a shows a top plan of the nut restrainer of Fig. 10a.
Fig. 11b shows a horizontal cross sectional view of the nut restrainer of Fig. 10a with a washer inserted.
Fig. 11c shows another horizontal cross-sectional view of the nut restrainer of Fig. 10a with a nut inserted.
Fig. 11d shows a front elevational cross-sectional view of the nut restrainer of Fig. 10a with a nut and a washer inserted.
Fig. 11e shows a right elevational cross-sectional view of the nut restrainer of Fig. 10a with a nut and a washer inserted.
Fig. 12a shows a right elevational cross-sectional view of the nut restrainer of Fig. 10a with a nut, a washer, and a bolt inserted at the moment the nut restrainer is affixed to a substrate plate.
Fig. 12b shows a right elevational cross-sectional view of the nut restrainer of Fig. 10a with a nut, a washer, and a bolt inserted, binding a fastened plate to a substrate plate.
Fig. 12c shows a horizontal cross-sectional view of the nut restrainer of Fig. 10a with a nut and a bolt inserted.
Fig. 13a shows a top perspective view of a nut restrainer comprising a cap and a base plate, which are a unitary structure of other embodiments of the disclosed technology.
Fig. 13b shows a top perspective view of a nut restrainer comprising a cap and a base plate, which are a unitary structure of other embodiments of the disclosed technology.
Fig. 14a shows a top plan of the nut restrainer of Fig. 13a with a nut inserted.
Fig. 14b shows a horizontal cross sectional view of the cap of Fig. 13a with a washer inserted.
Fig. 14c shows another horizontal cross sectional view of the cap of Fig. 13a with a nut inserted.
Fig. 14d shows a front elevational cross-sectional view of the nut restrainer of Fig. 13a with a nut and a washer inserted.
Fig. 15a shows a front elevational cross-sectional view of the nut restrainer of Fig. 13a with a nut, a washer, and a bolt inserted at the moment the nut restrainer is affixed to a substrate plate.
Fig. 15b shows a front elevational cross-sectional view of the nut restrainer of Fig. 13a with a nut, a washer, and a bolt inserted, binding a fastened plate to a substrate plate.
Fig. 16a shows a top perspective view of a nut restrainer comprising a cap and a base plate.
Fig. 16b shows a bottom perspective view of the nut restrainer of Fig. 16a.
Fig. 16c shows a top perspective view of the cap of Fig. 16a.
Fig. 16d shows a top perspective view of the base plate of Fig. 16a.
Fig. 17a shows a top plan of the nut restrainer of Fig. 16a with a nut and a washer inserted.
Fig. 17b shows a horizontal cross-sectional view of the nut restrainer of Fig. 16a with a nut inserted.
Fig. 17c shows a front elevational cross-sectional view of the nut restrainer of Fig. 16a with a nut and a washer inserted.
Fig. 18a shows a front elevational cross-sectional view of the nut restrainer of Fig. 16a with a nut, a washer, and a bolt inserted at the moment the nut restrainer is affixed to a substrate plate.
Fig. 18b shows a front elevational cross-sectional view of the nut restrainer of Fig. 16a with a nut, a washer, and a bolt inserted, binding a fastened plate to a substrate plate.
Fig. 19a shows a top perspective view of two joined-together nut restrainers comprising two caps and a common base plate of other embodiments of the disclosed technology.
Fig. 19b shows a top perspective view of a nut restrainer comprising a cap and a base plate of other embodiments of the disclosed technology.
Fig. 19c shows a top perspective view of the base plate of Fig. 19b.
Fig. 19d shows a top perspective view of the cap of Fig. 19b.
Fig. 20a shows a top perspective view of a nut restrainer comprising an attachable top, a cap body, and a base plate of other embodiments of the disclosed technology.
Fig. 20b shows a top perspective view of the cap body of Fig. 20a.
Fig. 20c shows a top perspective view of the base plate of Fig. 20a.
Fig. 20d shows a top perspective view of the attachable top of the nut restrainer of Fig. 20a.
Fig. 20e shows an elevational cross-sectional view of the nut restrainer of Fig. 20a with a nut inserted.

### DETAILED DESCRIPTION OF EMBODIMENTS OF THE DISCLOSED TECHNOLOGY

The disclosure is directed to a mechanism for securing a nut in place such that a bolt may be screwed into the nut at a later time. Furthermore, the nut may be secured in such a way that it may be moved in a lateral plane to correct for misalignment in its placement, for misalignment between the holes in a substrate plate and a fastened plate, and/or the like.

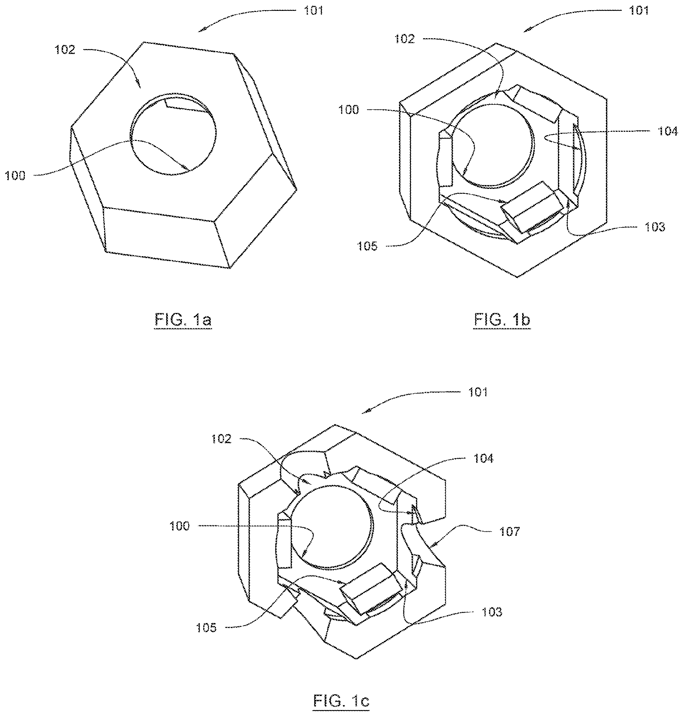

Fig. 1a shows a top perspective view of a nut restrainer of embodiments of the disclosed technology. For purposes of this disclosure, "top" and "bottom" are opposite sides with the "top" being generally at an edge of a convex side of a nut restrainer and a "bottom" being generally at an opposite edge of a concave side of the nut restrainer. The "bottom" also can be described as being at a substrate plate while the "top" is the side of a nut restrainer disposed away from the substrate plate.

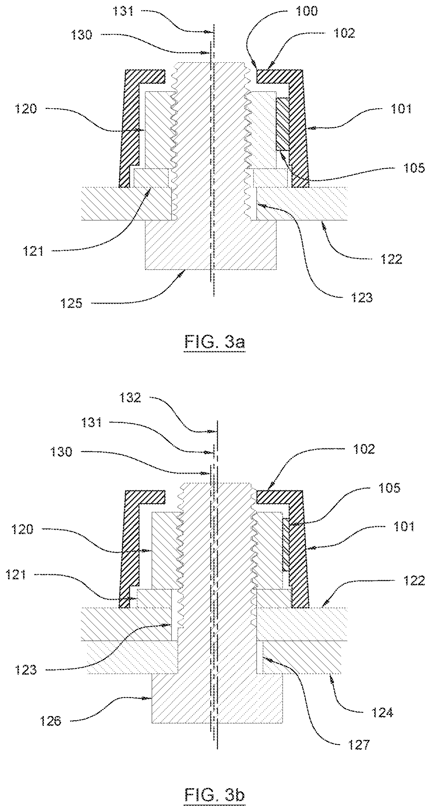

In particular, Fig. 1a illustrates a nut restrainer 101 that may have a top layer 102, which may include a hole 100 passing therethrough. In particular, the hole 100 may be defined by surfaces within the nut restrainer 101. The hole 100 may be sized, structured, arranged, disposed, and/or the like to allow a tip of a most elongated portion of a bolt, such as a centering bolt 125, a fastening bolt 126, and/or the like to pass therethrough. For example, the centering bolt 125, the fastening bolt 126, and/or the like may be inserted into the nut restrainer 101 from below and extend past a top of a nut 120 inserted therein and/or past the top layer 102 of the nut restrainer 101 (shown in figures 3a and 3b). The nut restrainer 101, as shown in this embodiment, may have sharp corners and sharp edges. In particular, the nut restrainer 101 may have a plurality of flat outer surfaces between a bottom of the nut restrainer 101 and a top of the nut restrainer 101. In various other embodiments, the corners and/or edges of the nut restrainer 101 may be filleted, otherwise smoothed, softened, and/or the like. In other aspects, the nut restrainer 101 may have any external shape.

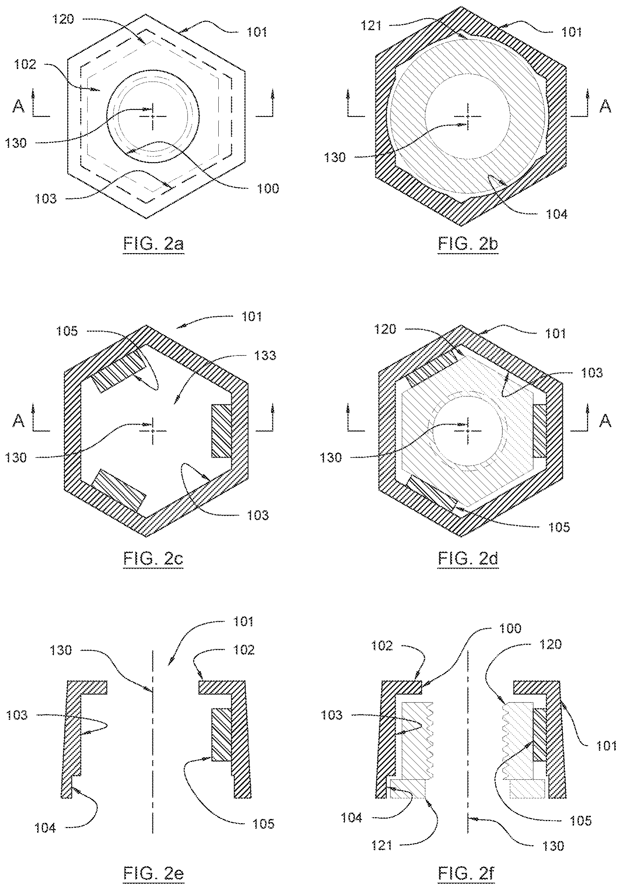

Fig. 1b shows a bottom perspective view of the nut restrainer of Fig. 1a. As shown in Fig. 1b, the nut restrainer 101 may have inner sidewalls with at least an upper portion and a lower portion. The nut restrainer 101 may include the upper inner sidewalls 103 that may be configured to hold and rotationally restrain a nut 120 (as shown in figure 2d). In particular, the upper inner sidewalls 103 of the nut restrainer 101 may prevent the nut 120 from turning past a finite limit. The nut restrainer 101 may include the lower inner sidewalls 104 that may be configured to hold a washer 121 (as shown in figure 2b).

Additionally, the nut restrainer 101 may be configured to be attached fixedly to a surface such as a substrate as described herein, which may be generally referred to as affixment. More specifically, a bottom surface of the nut restrainer 101 may be configured to be attached fixedly to a surface such as a substrate as described herein. In particular, the nut restrainer 101 may be configured to be welded to a substrate, attached to a substrate with adhesives, attached to a substrate with mechanical fasteners, attached to a substrate with other attachment mechanisms, attached to a substrate with other attachment processes, attached to a substrate with other attachment configurations, and/or the like.

One or more of the upper inner sidewalls 103 may have affixed thereto deformable elements 105. In particular aspects, the deformable elements 105 may be protrusions, may be defined as flanges extending from a recognizable and/or flat section of a surface or shape, and/or the like of the nut restrainer 101. The deformable elements 105 may be configured to hold the nut 120 substantially concentric within the nut restrainer 101. If the fastening bolt 126 is inserted non-concentrically through a bolt hole 127 and a substrate hole 123 (as shown in figure 3b), a configuration of the nut restrainer 101 and/or the deformable elements 105 may allow the fastening bolt 126 to shift the nut 120 slightly in a lateral direction to correct for the misalignment. In this regard, "slightly" may be defined as up to at least two times a difference between a radii of the fastening bolt 126 and the substrate hole 123.

In various embodiments, the deformable elements 105 may be affixed to all, some, or one of the upper inner sidewalls 103. The deformable elements 105 may be shaped, structured, and/or configured as rectangular prisms, cylindrical prisms, and/or any other form of three-dimensional shape. A single construction of the upper inner sidewall 103 may have one or more of the deformable elements 105 thereon. At least one of the deformable elements 105 may be removable and/or reattachable, and may be affixed by way of an adhesive, by means of a mechanical attachment, a frictional attachment, and/or the like. In other aspects, the deformable elements 105 may be integrally constructed with the nut restrainer 101, the lower inner sidewalls 104, the upper inner sidewall 103, and/or the like.

Additionally, the nut restrainer 101 illustrated in conjunction with figure 1a and figure 1b described above may further include any one or more features associated with any other figure of this disclosure. Moreover, the nut restrainer 101 illustrated in conjunction with figure 1a and figure 1b described above may further include any one or more features described in this disclosure.

Fig. 1c shows a bottom perspective view of a nut restrainer of other embodiments of the disclosed technology. As shown in this embodiment, the nut restrainer 101 may further include a plurality of holes 107 in the upper inner sidewall 103 and/or the lower inner sidewalls 104 of the nut restrainer 101. In various embodiments, the holes 107 may be in only the upper inner sidewalls 103 and/or only in the lower inner sidewalls 104. The holes 107 may be defined by surfaces of the nut restrainer 101. The holes 107 may, in various embodiments, allow for less costly production, faster production, and/or the like of the nut restrainer 101 and/or may allow for visual confirmation that the nut 120 and/or a washer 121 have been inserted into the nut restrainer 101.

Additionally, the nut restrainer 101 illustrated in conjunction with figure 1c described above may further include any one or more features associated with any other figure of this disclosure. Moreover, the nut restrainer 101 illustrated in conjunction with figure 1c described above may further include any one or more features described in this disclosure.

Fig. 2a shows a top plan of the nut restrainer of Fig. 1a with a nut inserted. Fig. 2b shows a horizontal cross sectional view of the nut restrainer of Fig. 1a with a washer inserted. Fig. 2c shows a horizontal cross sectional view of the nut restrainer of Fig. 1a. As shown in the Figures, a central axis 130 of the nut restrainer 101 is indicated. As shown in these figures, the nut 120 and/or the washer 121 may be concentrically aligned with the nut restrainer 101. As further shown in these figures, the upper inner sidewalls 103 of the nut restrainer 101 may be arranged around a cavity 133 of the nut restrainer 101 in a substantially equiangular hexagon with sides of unequal lengths, such that a distance from the central axis 130 to a midpoint of a cross-section of the upper inner sidewall 103 may not be equal to a distance from the central axis 130 to a midpoint of a cross-section of another configuration of the upper inner sidewall 103. In this embodiment, the deformable elements 105 may be affixed to a more-distant configuration of the upper inner sidewalls 103. The nut 120, in embodiments, may be permitted by the deformable elements 105 to move slightly in a lateral direction without requiring the deformable elements 105 to compress to zero thickness.

Fig. 2d shows a horizontal cross sectional view of the nut restrainer of Fig. 1a with a nut inserted. As shown in this figure, some or all of the deformable elements 105 may be compressed by the insertion of the nut 120 into the nut restrainer 101. When held in place by the deformable elements 105, the nut 120 may be frictionally held substantially concentric with the nut restrainer 101. In one aspect, the nut 120 may be frictionally held in place relative to the nut restrainer 101 due to frictional forces and/or the like.

Fig. 2e shows a front elevational cross-sectional view of the nut restrainer of Fig. 1a. Fig. 2f shows a front elevational cross-sectional view of the nut restrainer of Fig. 1a with a nut and a washer inserted. In the embodiment shown, when the nut 120 is inserted into the nut restrainer 101 and frictionally held in place by the deformable elements 105, the nut 120 may not be in contact with the top layer 102 of the nut restrainer 101 and/or with the upper inner sidewall 103 of the nut restrainer 101 that does not have a deformable element 105 affixed thereto. In other embodiments, the nut 120, when inserted into the nut restrainer 101 and frictionally held in place by the deformable elements 105, may be fully or partially in contact with the top layer 102 of the nut restrainer 101 and/or with the upper inner sidewall 103 of the nut restrainer 101, which does not have a configuration of the deformable element 105 affixed thereto.

Additionally, the nut restrainer 101 illustrated in conjunction with figure 2a through figure 2f described above may further include any one or more features associated with any other figure of this disclosure. Moreover, the nut restrainer 101 illustrated in conjunction with figure 2a through figure 2f described above may further include any one or more features described in this disclosure.

Fig. 3a shows a front elevational cross-sectional view of the nut restrainer of Fig. 1a with a nut, a washer, and a bolt inserted at the moment the nut restrainer may be affixed to a substrate plate. Fig. 3b shows a front elevational cross-sectional view of the nut restrainer of Fig. 1a with a nut, a washer, and a bolt inserted, binding a fastened plate to a substrate plate. As shown by these figures, the nut restrainer 101 containing the nut 120 and the washer 121 may be attached to a substrate plate 122 nearly concentric with a substrate hole 123 therein by inserting a centering bolt 125 through the substrate hole 123 and into the nut 120 prior to connecting the nut restrainer 101 to the substrate plate 122. In particular, the nearly concentric arrangement in such that the lateral distance from the central axis 130 of the nut restrainer 101 to a central axis 131 of the substrate hole 123 does not exceed the difference in radii of the substrate hole 123 and the centering bolt 125.

Once the nut restrainer 101 has been attached to the substrate plate 122, a fastened plate 124 may be bound to the substrate plate 122 by passing the fastening bolt 126 through a bolt hole 127 and the substrate hole 123, and tightening with the nut 120. In cases where the central axis 132 of the fastening bolt 126 is not coincident with the central axis 130 of the nut restrainer 101, the nut 120 may be moved laterally, compressing the deformable elements 105, thus allowing the fastening bolt 126 to pass therethrough and to emerge from the nut 120 and through the hole 100 in the top layer 102 of the nut restrainer 101. In this regard, the nut restrainer 101 and/or the deformable elements 105 may provide a self-aligning configuration.

Additionally, the nut restrainer 101 illustrated in conjunction with figure 3a through figure 3b described above may further include any one or more features associated with any other figure of this disclosure. Moreover, the nut restrainer 101 illustrated in conjunction with figure 3a and figure 3b described above may further include any one or more features described in this disclosure.

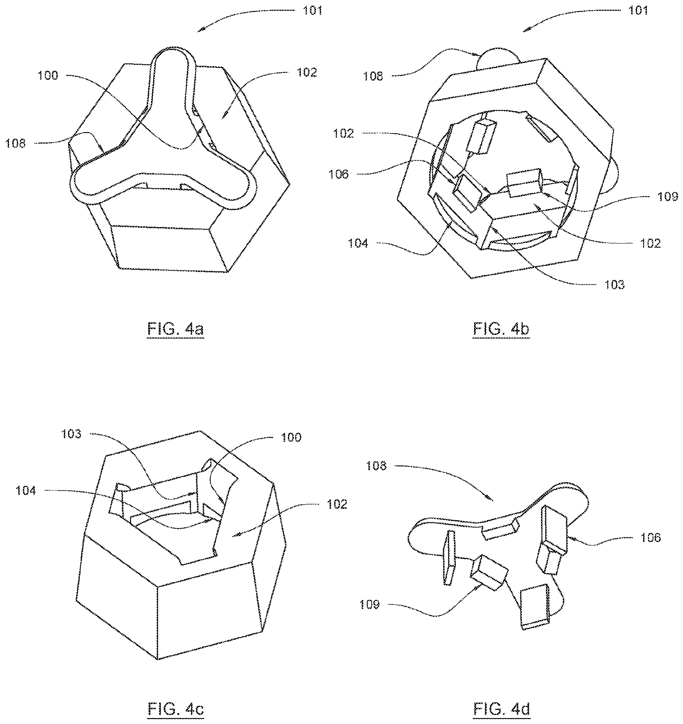

Fig. 4a shows a top perspective view of a nut restrainer and attached removable cover of other embodiments of the disclosed technology. Fig. 4b shows a bottom perspective view of the nut restrainer and removable cover of Fig. 4a. In particular, the nut restrainer 101 may include a removable cover 108 and a plurality of inner protrusions 109. The removable cover 108 may be removably attachable to the nut restrainer 101 by way of the plurality of inner protrusions 109. When attached, at least a part of the removable cover 108 may extend past the upper inner sidewall 103 and/or the lower inner sidewalls 104 of the nut restrainer 101. In one aspect, the removable cover 108 may be implemented as a retainer, a retaining mechanism, and/or the like.

Fig. 4c shows a top perspective view of the nut restrainer of Fig. 4a with a removable cover absent. At least some of the sides of the hole 100 in the top layer 102 of the nut restrainer 101 may be filleted or otherwise smoothed and/or rounded such that the inner protrusions 109 of the removable cover 108 may easily be snapped into place. In this regard, the construction of the inner protrusions 109 and/or the removable cover 108 may be configured for snapped attachment. In other embodiments, the removable cover 108 may be removably attachable to the nut restrainer 101 by way of some other mechanism, such as threading, teeth, adhesive, and/or the like. In other embodiments, the upper inner sidewalls 103 of the nut restrainer 101 may have one or more deformable protrusions affixed thereupon.

Fig. 4d shows a bottom perspective view of the removable cover of Fig. 4a. The removable cover 108 may have a plurality of spacing protrusions 106, which may be configured to hold the nut 120 concentric with the nut restrainer 101 while the removable cover 108 is attached to the nut restrainer 101. In various embodiments, the spacing protrusions 106 may be removably attachable to the removable cover 108. In one or more aspects, the spacing protrusions 106 may not be deformable. In this regard, not deformable may mean that the spacing protrusions 106 may not be made of a material with a greater level of resilience than a level of resilience of the rest of the nut restrainer 101. In this embodiment, the removable cover 108 may have three implementations of the spacing protrusions 106 and three implementations of the inner protrusions 109 for holding itself in place relative to the nut restrainer 101. In other embodiments, the removable cover 108 may have a greater or fewer number of either of the spacing protrusions 106 or of the inner protrusions 109.

Additionally, the nut restrainer 101 illustrated in conjunction with figure 4a through figure 4d described above may further include any one or more features associated with any other figure of this disclosure. Moreover, the nut restrainer 101 illustrated in conjunction with figure 4a and figure 4d described above may further include any one or more features described in this disclosure.

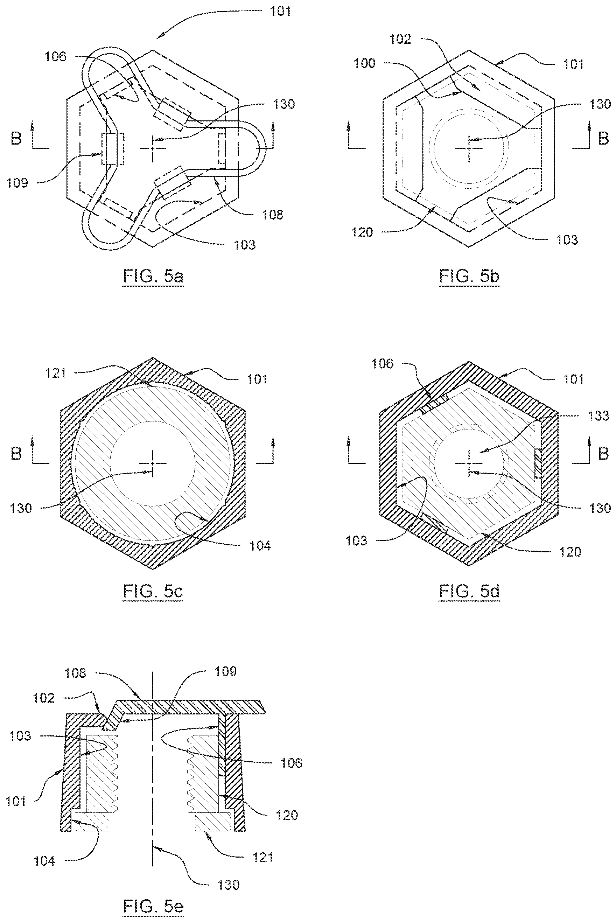

Fig. 5a shows a top plan of the nut restrainer and removable cover of Fig. 4a. Fig. 5b shows a top plan of the nut restrainer of Fig. 4a with the removable cover absent and a nut inserted. As shown by these figures, when attached to the nut restrainer 101, the spacing protrusions 106 of the removable cover 108 may be in contact with portions of the upper inner sidewalls 103 of the nut restrainer 101, while the inner protrusions 109 may be in contact with inner sides of the hole 100 in the top layer 102 of the nut restrainer 101. In other embodiments, the spacing protrusions 106 may be spaced apart from the upper inner sidewalls 103 of the nut restrainer 101. In any embodiment, when attached to the nut restrainer 101, the removable cover 108, as shown, may be substantially concentric with the nut restrainer 101 and, if inserted, with the nut 120.

In the embodiment shown, an outer side of sidewalls of the nut restrainer 101 may have a shape of a substantially equiangular and equilateral hexagon. The upper inner sidewalls 103 and the lower inner sidewalls 104 of the nut restrainer 101 may have a shape of a substantially equiangular and equilateral hexagon as well, with the upper inner sidewalls 103 having cutouts therein to allow for a substantially circular configuration of the washer 121 to be inserted. In other embodiments, the outer side of sidewalls of the nut restrainer 101 may be in any other shape, such as a round, ovoid shape, any other polygon, regular or otherwise, and/or the like so long as the upper inner sidewalls 103 may rotationally restrain the nut 120, if inserted.

Fig. 5c shows a horizontal cross sectional view of the nut restrainer of Fig. 4a with a washer inserted. Fig. 5d shows a horizontal cross sectional view of the nut restrainer of Fig. 4a with a nut inserted. Fig. 5e shows a front elevational cross-sectional view of the nut restrainer and removable cover of Fig. 4a with a nut and a washer inserted. As shown in these figures, the nut restrainer 101 may include spacing protrusions 106. In this regard, when the nut 120 is inserted into the nut restrainer 101, the nut 120 may be held substantially concentrically with the nut restrainer 101 by the spacing protrusions 106. Furthermore, the removable cover 108 may be configured to be removed after the nut restrainer 101 has been attached to the substrate plate 122, allowing the nut 120 to move laterally within nut restrainer 101. In the embodiment shown, the spacing protrusions 106 may extend to a point about halfway along a side of the nut 120. In various embodiments, the spacing protrusions 106 may extend above or below this point on a side of the nut 120. In further embodiments, various individual configurations of the spacing protrusions 106 may be of differing lengths.

Additionally, the nut restrainer 101 illustrated in conjunction with figure 5a through figure 5e described above may further include any one or more features associated with any other figure of this disclosure. Moreover, the nut restrainer 101 illustrated in conjunction with figure 5a through figure 5e described above may further include any one or more features described in this disclosure.

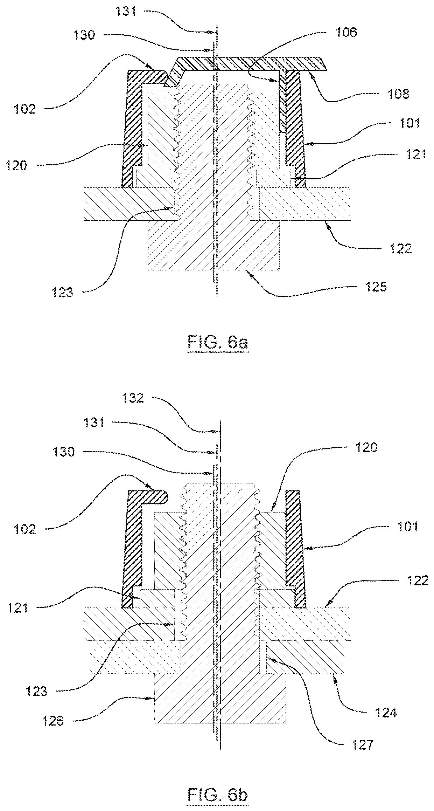

Fig. 6a shows a front elevational cross-sectional view of the nut restrainer and removable cover of Fig. 4a with a nut, a washer, and a bolt inserted at the moment the nut restrainer is affixed to a substrate plate. Fig. 6b shows a front elevational cross-sectional view of the nut restrainer and removable cover of Fig. 4a with a nut, a washer, and a bolt inserted, binding a fastened plate to a substrate plate. In some embodiments, the centering bolt 125 may be inserted after the removable cover 108 and may be attached to the nut restrainer 101. In other embodiments, the removable cover 108 may be attached after the centering bolt 125 has been inserted into and tightened with the nut 120. The removable cover 108 and the centering bolt 125 may be removed after the nut restrainer 101 has been attached to the substrate plate 122, thereby allowing the nut 120 to move laterally within the nut restrainer 101. Once the nut restrainer 101 has been attached to the substrate plate 122, a fastened plate 124 may be bound to the substrate plate 122 by passing the fastening bolt 126 through the bolt hole 127 and the substrate hole 123, and tightening with the nut 120. In cases where the central axis 132 of the fastening bolt 126 is not coincident with the central axis 130 of the nut restrainer 101, the nut 120 may be moved laterally within nut restrainer 101, thus allowing fastening bolt 126 to pass therethrough and to emerge from the nut 120 and through the hole 100 in the top layer 102 of the nut restrainer 101. In other words, the above-described configuration of the nut restrainer 101 is configured and structured for self-alignment.

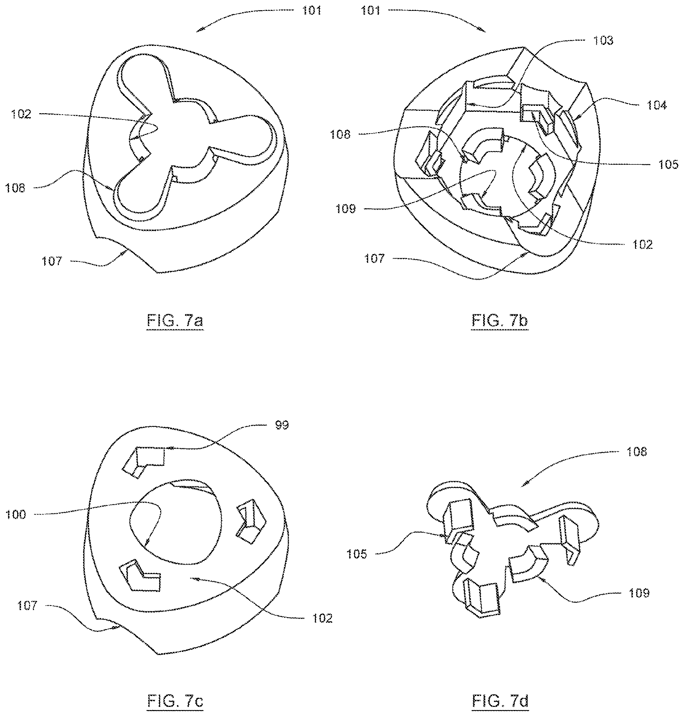

Fig. 7a shows a top perspective view of a nut restrainer and removable cover of other embodiments of the disclosed technology. The nut restrainer 101 may be configured and structured in a shape of a roughly regular triangular prism with rounded corners. The nut restrainer 101 furthermore may have the holes 107 in walls of the nut restrainer 101 at each angle. In other embodiments, the holes 107 may be absent from the nut restrainer 101, the holes 107 may be located at other parts of the nut restrainer 101, there may be more or less than three configurations of the holes 107 and the nut restrainer 101. A removable cover 108 may be removably attached to the nut restrainer 101, such that substantially no part of the removable cover 108 extends past the edges of the top layer 102 of the nut restrainer 101. The removable cover 108, in the embodiment shown, may have a central portion in a shape of a substantially regular triangle with rounded corners. In one or more aspects, the nut restrainer 101 may be configured such that emanating from each side of the triangular central portion of the removable cover 108 there may be a flap, a flap structure, and/or the like.

Fig. 7b shows a bottom perspective view of the nut restrainer and removable cover of Fig. 7a. The upper inner sidewalls 103 of the nut restrainer 101 may be in a shape of a substantially regular hexagon, while the lower inner sidewalls 104 may be in a substantially circular shape, corresponding to a shape of a standard configuration of the washer 121. Other shapes for the nut restrainer 101 are contemplated as well.

The removable cover 108 may have a plurality of the inner protrusions 109 configured to hold the removable cover 108 in place when inserted into the hole 100 passing through the top layer 102 of the nut restrainer 101. The removable cover 108 further may have a plurality of outer configurations of the deformable elements 105 configured to fit through outer holes 99 in the top layer 102. These outer holes 99 in the top layer 102 may be smaller than, and located surrounding, the hole 100 in the top layer 102 over which the central portion of the removable cover 108 rests when removably connected to the nut restrainer 101. The deformable elements 105, when inserted into the outer holes 99 in the top layer 102, may be spaced apart from the upper inner sidewalls 103. The deformable elements 105 may be configured to hold the nut 120 substantially concentric with nut restrainer 101 when the nut 120 is inserted therein.

Fig. 7c shows a top perspective view of the nut restrainer of Fig. 7a with removable cover absent. Fig. 7d shows a bottom perspective view of the removable cover of Fig. 7a. In particular, the hole 100 in the center of the top layer 102 of the nut restrainer 101 may be, in this embodiment, shaped to substantially match the shape of the central portion of the removable cover 108. In other embodiments, the shapes of the hole 100 in the top layer 102 of the nut restrainer 101, and of the central portion of the removable cover 108, may both be substantially circular, ovoid, rectangular, and/or any other shape. In further embodiments, the shapes of the hole 100 in the top layer 102 and of the central portion of the removable cover 108 may differ.

The outer configurations of the deformable elements 105 of the removable cover 108 may be, in the embodiment shown, in a shape of two rectangular prisms joined at an angle. This shape matches that of the corresponding configurations of the outer holes 99 in the top layer 102. Furthermore, the corresponding configurations of the outer holes 99 in the top layer 102 may coincide with the vertices of the substantially regular hexagonal shape of the upper inner sidewalls 103. In other embodiments, the deformable elements 105 of the removable cover 108 may be in a different shape, such as a single, un-angled rectangular prism, a differently-shaped prism, and/or the like. The corresponding configurations of the outer holes 99 in the top layer 102 may be located at sides, rather than vertices, of the substantially regular hexagonal shape of the upper inner sidewalls 103. In further embodiments, the top layer 102 of the nut restrainer 101 may have only one implementation of the hole 100 passing therethrough, which includes branches corresponding to the deformable elements 105 and an inner section corresponding to the central section of the removable cover 108.

Additionally, the nut restrainer 101 illustrated in conjunction with figure 7a through figure 7d described above may further include any one or more features associated with any other figure of this disclosure. Moreover, the nut restrainer 101 illustrated in conjunction with figure 7a through figure 7d described above may further include any one or more features described in this disclosure.

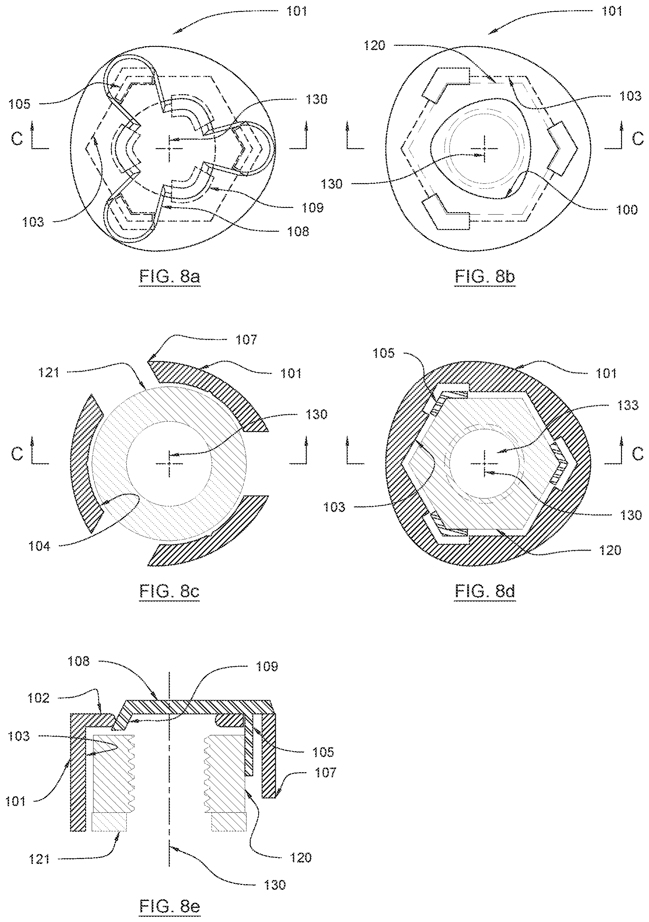

Fig. 8a shows a top plan of the nut restrainer and removable cover of Fig. 7a. Fig. 8b shows a top plan of the nut restrainer of Fig. 7a with the removable cover absent and a nut inserted. Fig. 8c shows a horizontal cross-sectional view of the nut restrainer of Fig. 7a with a washer inserted. Fig. 8d shows a horizontal cross-sectional view of the nut restrainer of Fig. 7a with a nut inserted. As shown by these figures, the nut 120 may be configured and/or structured in a shape of a regular hexagon. The nut restrainer 101 may be configured and/or structured in a shape of a rounded triangular prism with corners at locations corresponding to three corners of the nut 120. The flaps and the deformable elements 105 of the removable cover 108 may be placed at locations corresponding to three sides of the central portion of the removable cover 108 and may correspond to straight sides of the nut 120 rather than to corners of the nut 120. The nut restrainer 101 may include cutouts in the upper inner sidewalls 103 that may be configured and/or structured to provide space for the deformable elements 105 to move slightly in a lateral direction as required to accommodate slight lateral movement of the nut 120 when a fastening bolt 126 is inserted therein.

Fig. 8e shows a front elevational cross-sectional view of the nut restrainer and removable cover of Fig. 7a with a nut and a washer inserted. As shown by this figure, the height of the holes 107 in the sides of the nut restrainer 101 may be of a height lower than a lowest point of the outer configurations of the deformable elements 105 of the removable cover 108. In other embodiments, at least a portion of at least one of the outer configurations of the deformable elements 105 may overlap at least a portion of at least one of the holes 107.

Additionally, the nut restrainer 101 illustrated in conjunction with figure 8a through figure 8e described above may further include any one or more features associated with any other figure of this disclosure. Moreover, the nut restrainer 101 illustrated in conjunction with figure 8a through figure 8e described above may further include any one or more features described in this disclosure.

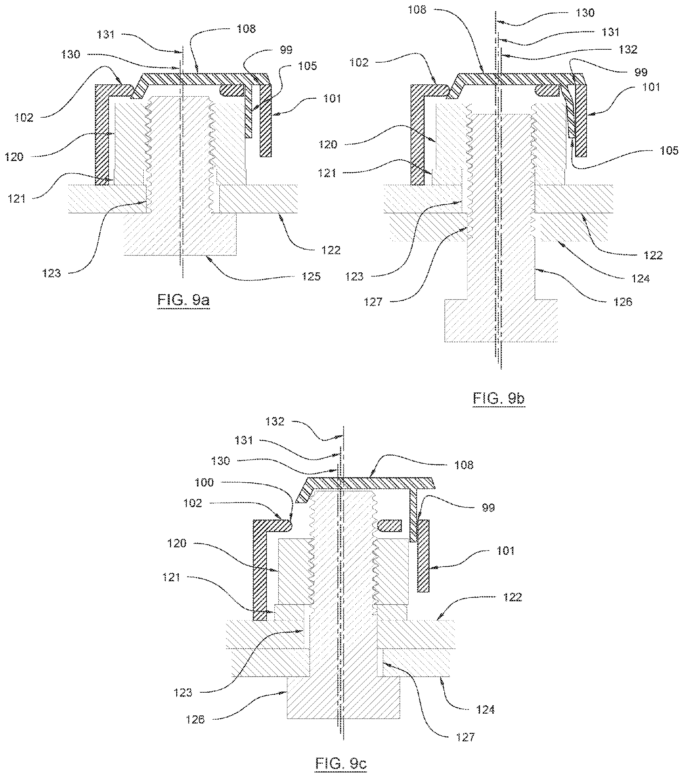

Fig. 9a shows a front elevational cross-sectional view of the nut restrainer and removable cover of Fig. 7a with a nut, a washer, and a bolt inserted at the moment the nut restrainer is affixed to a substrate plate. Fig. 9b shows a front elevational cross-sectional view of the nut restrainer and removable cover of Fig. 7a with a nut and a washer inserted during insertion of a bolt. Fig. 9c shows a front elevational cross-sectional view of the nut restrainer and removable cover of Fig. 7a with a nut, a washer, and a bolt inserted, binding a fastened plate to a substrate plate. As shown by these figures, various aspects of the nut restrainer 101 may be configured such that once the nut restrainer 101 has been attached to the substrate plate 122, a fastened plate 124 may be bound to the substrate plate 122 by passing the fastening bolt 126 through the bolt hole 127 and the substrate hole 123, and tightening with the nut 120. In cases where the central axis 132 of the fastening bolt 126 is not coincident with the central axis 130 of the nut restrainer 101, the nut restrainer 101 may be structured and/or configured such that the nut 120 may be moved laterally, bending the deformable elements 105, thus allowing the fastening bolt 126 to pass therethrough and to emerge from the nut 120 and through the hole 100 in the top layer 102 of the nut restrainer 101. In this regard, the nut restrainer 101 may provide a self-aligning configuration. In the embodiment shown, the emergence of the fastening bolt 126 may dislodge the removable cover 108 after passing through the hole 100 in the top layer 102. In other embodiments, the removable cover 108 may be configured to allow the fastening bolt 126 to emerge from the hole 100 in the top layer 102 without dislodging the removable cover 108.

Additionally, the nut restrainer 101 illustrated in conjunction with figure 9a through figure 9c described above may further include any one or more features associated with any other figure of this disclosure. Moreover, the nut restrainer 101 illustrated in conjunction with figure 9a through figure 9c described above may further include any one or more features described in this disclosure.

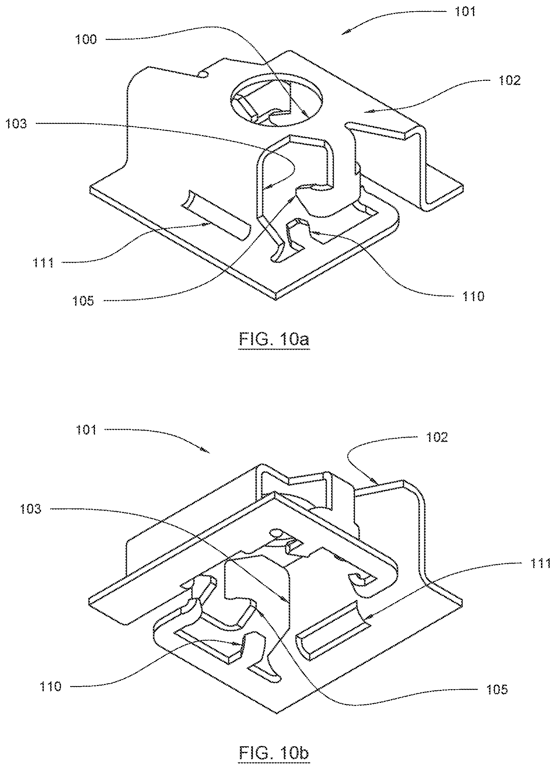

Fig. 10a shows a top perspective view of a nut restrainer of other embodiments of the disclosed technology. Fig. 10b shows a bottom perspective view of the nut restrainer of Fig. 10a. As shown in these figures, the nut restrainer 101 may be structured and/or configured to be made of a single piece of metal or other material folded and the nut restrainer 101 may further include cutouts therein. The top layer 102 of the nut restrainer 101 may include the hole 100 sized, structured, and/or configured to allow a bolt, such as the centering bolt 125, the fastening bolt 126, and/or the like to pass therethrough. In one or more aspects, the deformable elements 105 may extend downward from the top layer 102 of the nut restrainer 101. One or more of the deformable elements 105 may terminate at a lower end in a U-shaped piece that may include tips extending horizontally, approximately toward (within 30 radial degrees) the center of the nut restrainer 101.

A lowest layer of the nut restrainer 101 may include cutouts 111 sized, configured, structured, and/or the like to allow a portion of the washer 121 to pass therethrough. The lowest layer of the nut restrainer 101 may also include lower deformable protrusions 110 that may extend horizontally approximately toward a central point of the nut restrainer 101. Additionally, the lower deformable protrusions 110 may be bent upwards at their tips. The lowest layer of the nut restrainer 101 and the top layer 102 of the nut restrainer 101 may be connected by way of at least two configurations of the upper inner sidewalls 103. In the embodiment shown, the upper inner sidewall 103 may be substantially vertical and may include rounded upper and lower edges connecting to the lowest layer and the top layer 102 of the nut restrainer 101.

Additionally, the nut restrainer 101 illustrated in conjunction with figure 10a through figure 10b described above may further include any one or more features associated with any other figure of this disclosure. Moreover, the nut restrainer 101 illustrated in conjunction with figure 10a and figure 10b described above may further include any one or more features described in this disclosure.

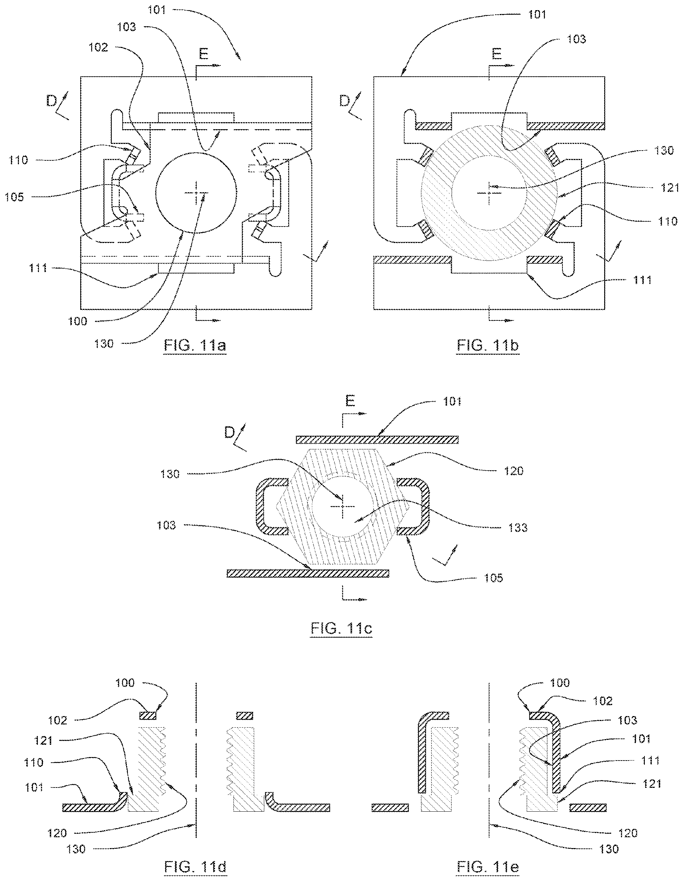

Fig. 11a shows a top plan of the nut restrainer of Fig. 10a. Fig. 11b shows a horizontal cross sectional view of the nut restrainer of Fig. 10a with a washer inserted. Fig. 11c shows a horizontal cross-sectional view of the nut restrainer of Fig. 10a with a nut inserted. As shown by these figures, the lower deformable protrusions 110 and the cutouts 111 of the nut restrainer 101 may be structured and/or configured to allow the washer 121 to move slightly in a lateral direction within the nut restrainer 101 when pushed by the fastening bolt 126 inserted therethrough. In the embodiment shown, the nut 120 may be spaced-apart from the upper inner sidewall 103 of the nut restrainer 101 unless acted upon by a force pushing it in a lateral direction. When the nut 120 is pushed in a lateral direction within the nut restrainer 101, the tips of the deformable elements 105 may be configured and/or structured to bend, twist, and/or the like such as away from a central axis 130 of the nut restrainer 101, to allow lateral movement.

In some embodiments, the nut restrainer 101 may be structured and/or configured such that the force due to friction between the nut 120 and the deformable elements 105 may be sufficient to hold the nut 120 substantially concentric with the nut restrainer 101 against a lateral force on the nut 120 due to Earth gravity. In various embodiments, the deformable elements 105 and/or the lower deformable protrusions 110 may be structured and/or configured to have a higher flexibility, resilience, and/or the like than a rest of the nut restrainer 101 and/or may be made of a material with a higher flexibility, resilience, and/or the like than one or more other portions or components of the nut restrainer 101.

Fig. 11d shows a front elevational cross-sectional view of the nut restrainer of Fig. 10a with a nut and a washer inserted. Fig. 11e shows a right elevational cross-sectional view of the nut restrainer of Fig. 10a with a nut and a washer inserted. In the embodiment shown, each of a front and back side of the nut restrainer 101 may include two implementations of the lower deformable protrusions 110. In various embodiments, only one implementation of the lower configuration of the deformable protrusion 110 may be located on each of a front, back, right, and/or left side of the nut restrainer 101.

Additionally, the nut restrainer 101 illustrated in conjunction with figure 11a through figure 11e described above may further include any one or more features associated with any other figure of this disclosure. Moreover, the nut restrainer 101 illustrated in conjunction with figure 11a through figure 11e described above may further include any one or more features described in this disclosure.

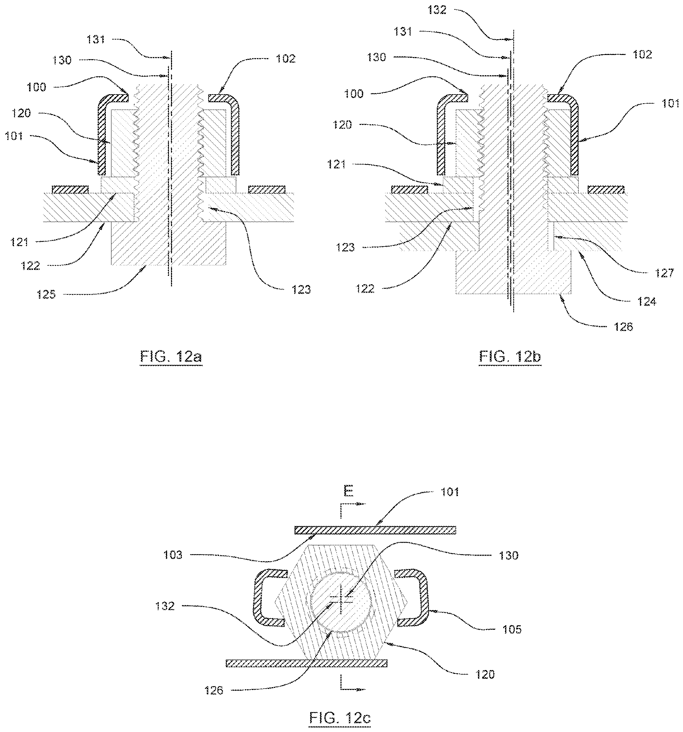

Fig. 12a shows a right elevational cross-sectional view of the nut restrainer of Fig. 10a with a nut, a washer, and a bolt inserted at the moment the nut restrainer is affixed to a substrate plate. Fig. 12b shows a right elevational cross-sectional view of the nut restrainer of Fig. 10a with a nut, a washer, and a bolt inserted, binding a fastened plate to a substrate plate. Fig. 12c shows a horizontal cross-sectional view of the nut restrainer of Fig. 10a with a nut and a bolt inserted. As shown by these figures, the nut restrainer 101 may be configured and/or structured such that once the nut restrainer 101 has been attached to the substrate plate 122, a fastened plate 124 may be bound to the substrate plate 122 by passing the fastening bolt 126 through the bolt hole 127 and the substrate hole 123, and tightening with the nut 120. In cases where the central axis 132 of the fastening bolt 126 is not coincident with the central axis 130 of the nut restrainer 101, the nut restrainer 101 may be structured and/or configured such that the nut 120 may be moved laterally, bending, twisting, and/or the like the deformable elements 105, thus allowing the fastening bolt 126 to pass therethrough and to emerge from the nut 120 and through the hole 100 in the top layer 102 of the nut restrainer 101. In this regard, the nut restrainer 101 may provide a self-aligning configuration.

Additionally, the nut restrainer 101 illustrated in conjunction with figure 12a through figure 12c described above may further include any one or more features associated with any other figure of this disclosure. Moreover, the nut restrainer 101 illustrated in conjunction with figure 12a through figure 12c described above may further include any one or more features described in this disclosure.

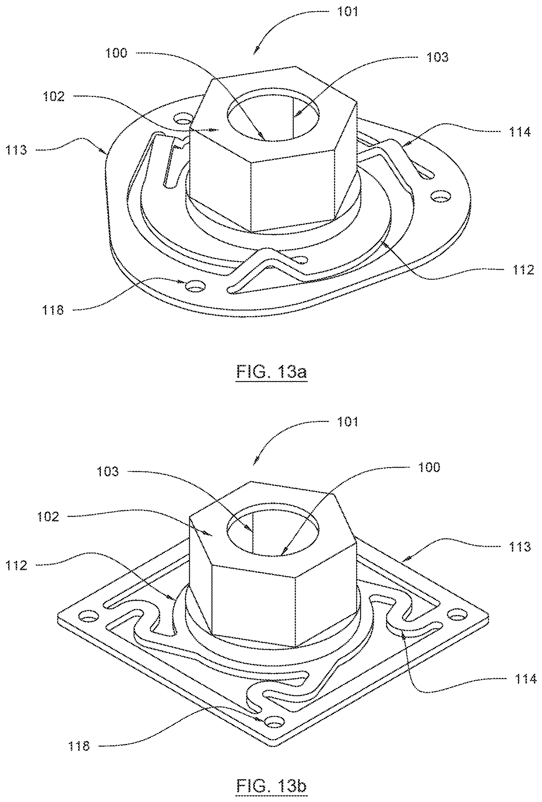

Fig. 13a shows a top perspective view of a nut restrainer comprising a cap and a base plate, which are a unitary structure of other embodiments of the disclosed technology. Fig. 13b shows a top perspective view of a nut restrainer comprising a cap and a base plate, which are a unitary structure of other embodiments of the disclosed technology. In particular, embodiments of the nut restrainer 101 may include a cap 112 and a base plate 113, which may be connected by way of flexible connectors 114. The flexible connectors 114 may allow the cap 112 to move in one, more than one, and/or all lateral directions relative to the base plate 113. The base plate 113 may include weld location indicators 118. Additionally, the base plate 113 may be configured to be attached fixedly to a surface such as a substrate as described herein. More specifically, a bottom surface of the base plate 113 may be configured to be attached fixedly to a surface such as a substrate as described herein. In particular, the base plate 113 may be configured to be welded to a substrate, attached to a substrate with adhesives, attached to a substrate with mechanical fasteners, attached to a substrate with other attachment mechanisms, attached to a substrate with other attachment processes, attached to a substrate with other attachment configurations, and/or the like.

In the embodiments shown, the cap 112 of the nut restrainer 101 may have an upper section structured and/or configured in a shape of a regular hexagonal prism with the upper inner sidewalls 103. The top layer 102 of this aspect of the nut restrainer 101 may be above the upper section and may have the hole 100 that may be configured and/or structured wide enough to accommodate a most elongated section of a bolt, such as the centering bolt 125, the fastening bolt 126, and/or the like passing through a central portion thereof. The cap 112 of the nut restrainer 101 also may be structured and/or configured to have a lower section in a shape of a cylinder. The upper and lower sections of the cap 112 may be structured and/or configured to be sized to accommodate, respectively, the nut 120 and the washer 121.

In the embodiment shown in Fig. 13a, the base plate 113 may be structured and/or configured to be in a shape of a regular triangle with rounded corners. There may be three configurations of the flexible connectors 114. In particular, the flexible connectors 114 may be structured and/or configured to each be connected to a rounded corner of the base plate 113. The flexible connectors 114 may be structured and/or configured to, when not deformed by a force twisting or moving the mobile central portion of the cap 112 in a lateral direction, bend upwards. There may be three implementations of the weld location indicators 118, each located at a rounded corner of the base plate 113. However, any number of the weld location indicators 118 may be utilized in conjunction with the nut restrainer 101.

In the embodiment shown in Fig. 13b, the base plate 113 may be structured and/or configured in a shape of a square. There may be four configurations of the flexible connectors 114, each connected to a corner of the base plate 113. However, any number of the flexible connectors 114 may be implemented in this aspect of the nut restrainer 101. The flexible connectors 114, when not deformed by a force twisting, moving, and/or the like the mobile central portion of the cap 112 in a lateral direction, may lie substantially flat in a same plane as the base plate 113. The flexible connectors 114 may be configured and/or structured, in the embodiment shown, to bend so as to elongate and then stiffen in response to the application of torque to the nut 120 within the cap 112 in a direction associated with tightening the fastening bolt 126 within the nut 120. There are four implementations of weld location indicators 118, each located at a corner of the base plate 113. However, this aspect of the nut restrainer 101 may include any number of the weld location indicators 118.

In various other embodiments, the shape of the base plate 113 and/or the number of flexible connectors 114 and/or the shape of the cap 112 and/or the number of weld location indicators 118 may all vary.

Additionally, the nut restrainer 101 illustrated in conjunction with figure 13a through figure 13b described above may further include any one or more features associated with any other figure of this disclosure. Moreover, the nut restrainer 101 illustrated in conjunction with figure 13a and figure 13b described above may further include any one or more features described in this disclosure.

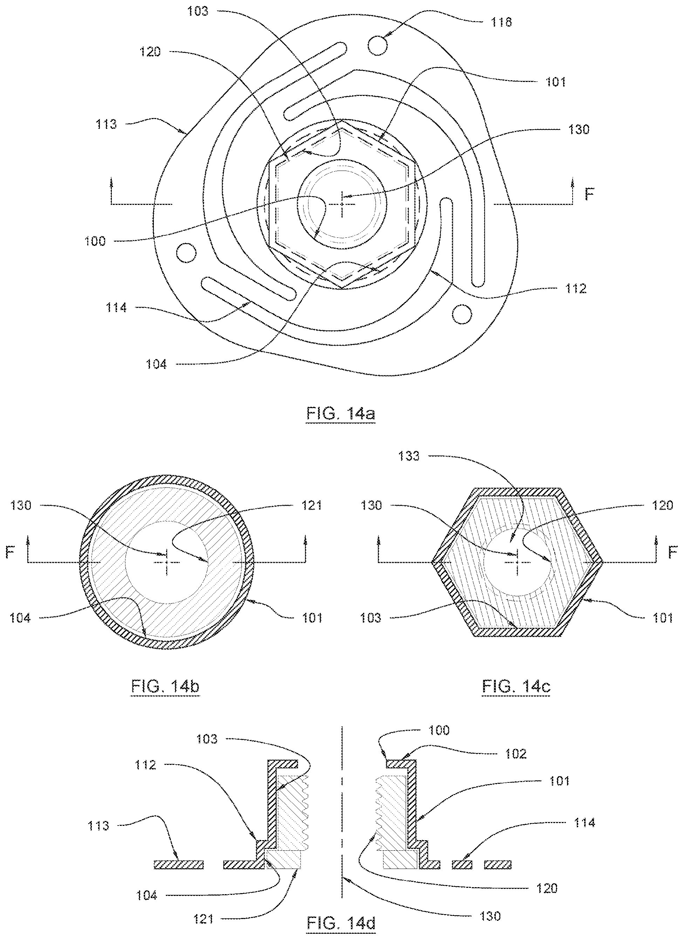

Fig. 14a shows a top plan of the nut restrainer of Fig. 13a with a nut inserted. As shown by this figure, the flexible connectors 114 may connect to the base plate 113 at locations near the weld location indicators 118. Thus, when the fastening bolt 126 is inserted into and turned within the nut 120, a greatest amount of torque may be applied to a portion of the base plate 113 that is most strongly affixed to a substrate plate.

Fig. 14b shows a horizontal cross sectional view of the cap of Fig. 13a with a washer inserted. Fig. 14c shows a horizontal cross sectional view of the cap of Fig. 13a with a nut inserted. Fig. 14d shows a front elevational cross-sectional view of the nut restrainer of Fig. 13a with a nut and a washer inserted. As shown by these figures, the upper inner sidewalls 103 and the lower inner sidewalls 104 may be structured and/or configured to be sized to minimize a gap between the upper inner sidewall 103, the lower inner sidewalls 104, and the nut 120 and the washer 121, respectively, while allowing the nut 120 and the washer 121 to be inserted into the nut restrainer 101 by hand without binding. The nut 120 and the washer 121 may be thus held substantially concentric with the cap 112 and/or with the nut restrainer 101 when inserted into the cap 112.

The flexible connectors 114 may be structured and/or configured to be sufficiently stiff to hold the cap 112, and the nut 120 and the washer 121 inserted therein substantially concentric with the base plate 113, when acted on laterally by Earth gravity. In some embodiments, the nut restrainer 101 and/or the cap 112 may further include deformable protrusions to concentrically align the nut 120 and/or the washer 121 with the cap 112 and/or with the nut restrainer 101.

Additionally, the nut restrainer 101 illustrated in conjunction with figure 14a through figure 14d described above may further include any one or more features associated with any other figure of this disclosure. Moreover, the nut restrainer 101 illustrated in conjunction with figure 14a through figure 14d described above may further include any one or more features described in this disclosure.

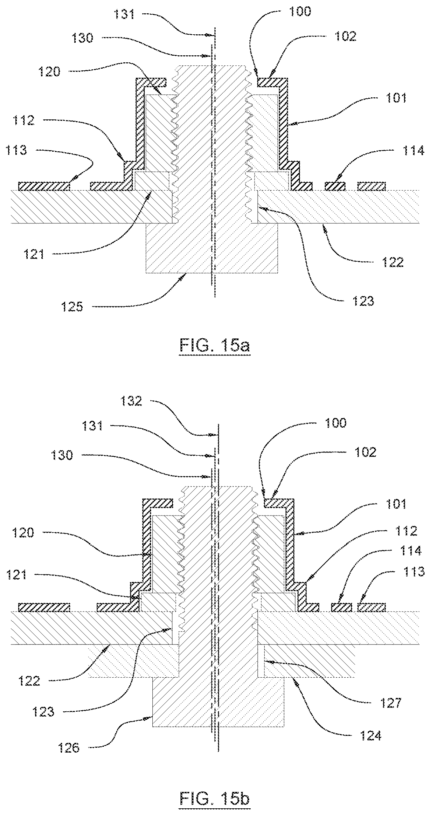

Fig. 15a shows a front elevational cross-sectional view of the nut restrainer of Fig. 13a with a nut, a washer, and a bolt inserted at the moment the nut restrainer is affixed to a substrate plate. Fig. 15b shows a front elevational cross-sectional view of the nut restrainer of Fig. 13a with a nut, a washer, and a bolt inserted, binding a fastened plate to a substrate plate. As shown by these figures, once the base plate 113 has been attached to the substrate plate 122, a fastened plate 124 may be bound to the substrate plate 122 by passing the fastening bolt 126 through a bolt hole 127 and a substrate hole 123, and tightening with the nut 120. In cases where the central axis 132 of the fastening bolt 126 is not coincident with the central axis 130 of the nut restrainer 101, the nut 120 and the cap 112 may be structured and/or configured to be moved laterally, deforming the flexible connectors 114, thus allowing fastening bolt 126 to pass therethrough and to emerge from the nut 120 and through the hole 100 in the top layer 102 of the nut restrainer 101. In this regard, the nut restrainer 101 may provide a self-aligning configuration.

Additionally, the nut restrainer 101 illustrated in conjunction with figure 15a and figure 15b described above may further include any one or more features associated with any other figure of this disclosure. Moreover, the nut restrainer 101 illustrated in conjunction with figure 15a and figure 15b described above may further include any one or more features described in this disclosure.

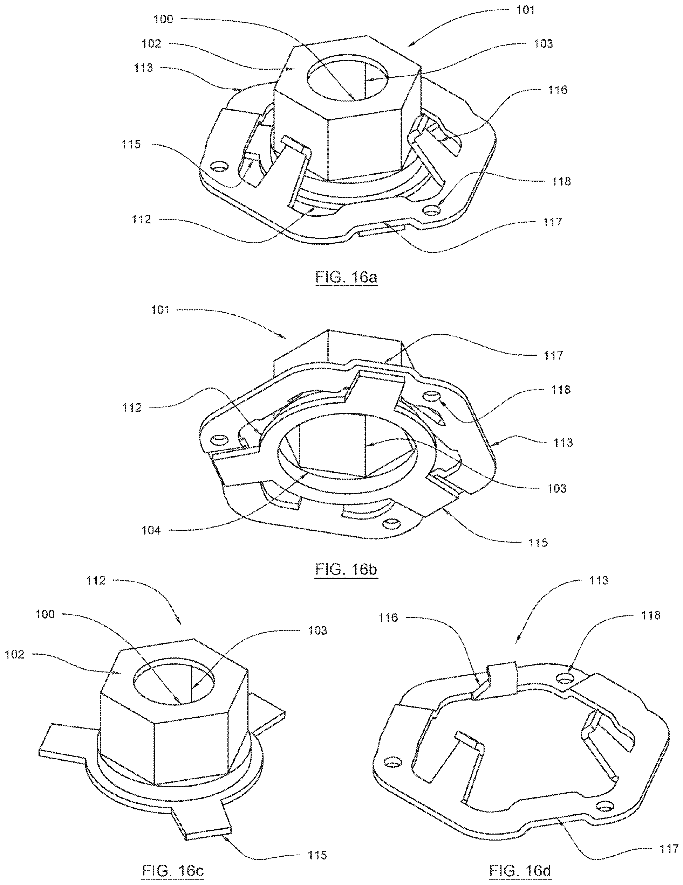

Fig. 16a shows a top perspective view of a nut restrainer comprising a cap and a base plate. Fig. 16b shows a bottom perspective view of the nut restrainer of Fig. 16a. In one or more aspects, the nut restrainer 101 may include a cap 112. The cap 112 may be surrounded by, unconnected to, and held in place by a base plate 113. In the embodiment shown, the base plate 113 may have deformable protrusions 116, which may engage three of six sides of an upper portion, in a shape of a regular hexagonal prism, of the cap 112. In other embodiments, the number of deformable protrusions 116 and/or the number of sides engaged with by the deformable protrusions 116 and/or the shape of the cap 112 may differ. When no force acts upon the cap 112 and/or any part placed therein in a lateral direction, the deformable protrusions 116 may hold the cap 112 substantially concentric with the base plate 113.

The cap 112 may include protrusions 115 emanating therefrom. The base plate 113 may include raised portions 117 corresponding to the protrusions 115 and the raised portions 117 may be configured and/or structured to be sized to allow the protrusions 115 to pass therethrough. The raised portions 117 may have a strength sufficient to prevent the protrusions 115 from being dislodged therefrom by a torque and/or a perpendicular force upon any part of the cap 112 and/or any part placed therein. In various embodiments, the number and/or locations of the protrusions 115 and the corresponding configurations of the raised portions 117 of the cap 112 may vary.

Fig. 16c shows a top perspective view of the cap of Fig. 16a. The cap 112 of the nut restrainer 101 may include a bottom layer from which the protrusions 115 emanate. Atop the bottom layer may be a portion in a shape of a cylinder sized to fit a washer 121. Atop this may be an upper portion in a shape of a regular hexagonal prism.

Fig. 16d shows a top perspective view of the base plate of Fig. 16a. The base plate 113, in the embodiment shown, may be structured and/or configured to be in a shape of a regular hexagon with rounded corners, corresponding to the regular hexagonal prism shape of a majority of a vertical extent of the cap 112. In other embodiments, the shape of the base plate 113 may differ.

In the embodiment shown, the deformable protrusions 116 and the raised portions 117 may be placed on alternating sides of the regular hexagon, such that the base plate 113 may include a total of three configurations of the deformable protrusions 116 and three of the raised portions 117. Furthermore, three configurations of the weld location indicators 118 may be located on alternating rounded corners of the base plate 113. In the embodiment shown, the weld location indicators 118 may be placed on an immediate right side of each of the raised portions 117 in order to counter a force exerted on the right side of the raised portion 117 by corresponding configurations of the protrusions 115 when a fastening bolt 126 is being tightened within a nut 120 and/or a washer 121 within the cap 112. In other embodiments, the numbers and/or placement and/or order of the deformable protrusions 116 and/or the raised portions 117 and/or the weld location indicators 118 may vary.

Additionally, the nut restrainer 101 illustrated in conjunction with figure 16a through figure 16d described above may further include any one or more features associated with any other figure of this disclosure. Moreover, the nut restrainer 101 illustrated in conjunction with figure 16a through figure 16d described above may further include any one or more features described in this disclosure.

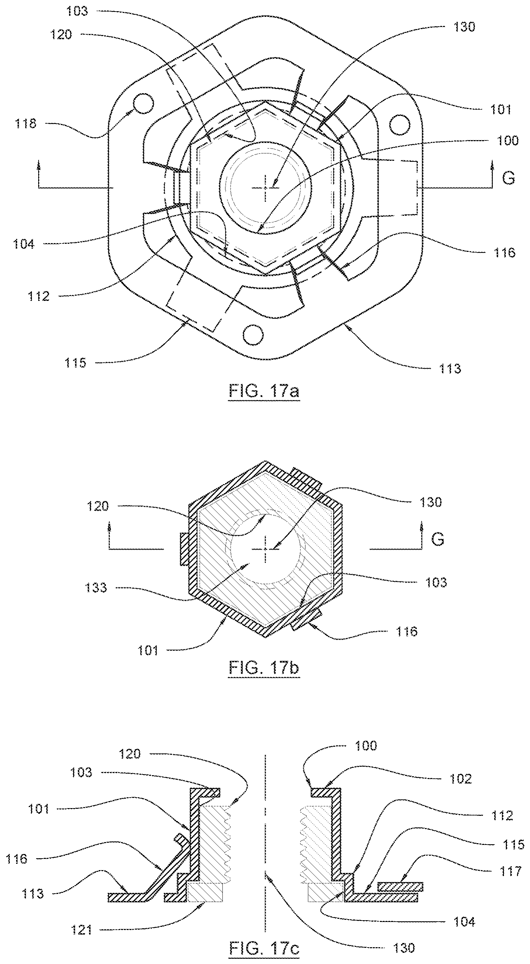

Fig. 17a shows a top plan of the nut restrainer of Fig. 16a with a nut and a washer inserted. Fig. 17b shows a horizontal cross-sectional view of the nut restrainer of Fig. 16a with a nut inserted. Fig. 17c shows a front elevational cross-sectional view of the nut restrainer of Fig. 16a with a nut and a washer inserted. As shown by these figures, one or more of the deformable protrusions 116 of the base plate 113 may be made of, structured, configured and/or the like with an inclined plane extending upward from a side of the base plate 113 to a corresponding side of the cap 112. In the embodiment shown, one or more of the deformable protrusions 116 may terminate in a second, smaller inclined plane extending upward and away from the cap 112. Furthermore, in the embodiment shown, a width of each deformable protrusion 116 may be greater at a point closer to the bottom portion of the base plate 113 and may be smaller at a point closer to the cap 112. In various other embodiments, the number and/or shapes and/or sizes of the deformable protrusions 116 may differ.

Furthermore, the upper inner sidewalls 103 and the lower inner sidewalls 104 may be structured and/or configured to be sized to minimize a gap between the upper inner sidewall 103, the lower inner sidewalls 104, and the nut 120 and the washer 121, respectively, while allowing the nut 120 and the washer 121 to be inserted into the nut restrainer 101 by hand without binding. The nut 120 and the washer 121 may thus be held substantially concentric with the cap 112 and/or with the nut restrainer 101 when inserted into the cap 112. The deformable protrusions 116 may be configured and/or structured to be stiff enough to keep the mobile central portion of the cap 112 and its contents substantially concentric with the base plate 113, when the nut 120, the washer 121, and/or the cap 112 are acted on in a lateral direction by Earth gravity.

Additionally, the nut restrainer 101 illustrated in conjunction with figure 17a through figure 17c described above may further include any one or more features associated with any other figure of this disclosure. Moreover, the nut restrainer 101 illustrated in conjunction with figure 17a through figure 17c described above may further include any one or more features described in this disclosure.

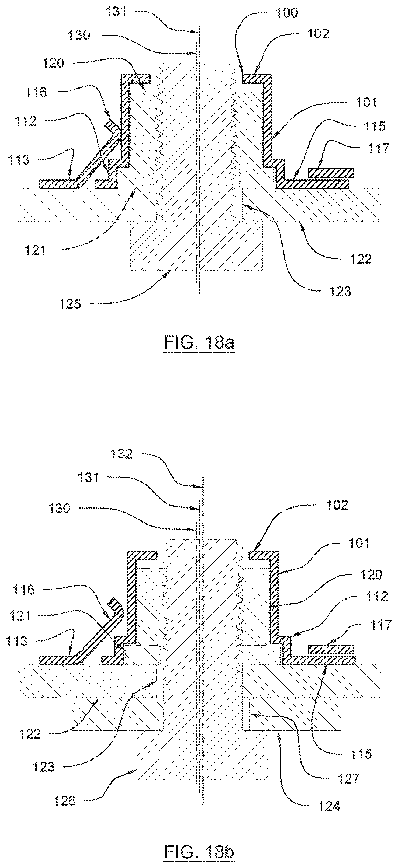

Fig. 18a shows a front elevational cross-sectional view of the nut restrainer of Fig. 16a with a nut, a washer, and a bolt inserted at the moment the nut restrainer is affixed to a substrate plate. Fig. 18b shows a front elevational cross-sectional view of the nut restrainer of Fig. 16a with a nut, a washer, and a bolt inserted, binding a fastened plate to a substrate plate. As shown by these figures, once the base plate 113 has been attached to the substrate plate 122, a fastened plate 124 may be bound to the substrate plate 122 by passing a fastening bolt 126 through a bolt hole 127 and a substrate hole 123, and tightening with the nut 120. In cases where the central axis 132 of the fastening bolt 126 is not coincident with the central axis 130 of the nut restrainer 101, the nut 120, and/or the cap 112 may be moved laterally, thus allowing the fastening bolt 126 to pass therethrough and to emerge from the nut 120 and through the hole 100 in the top layer 102 of the nut restrainer 101. In this regard, the nut restrainer 101 may provide a self-aligning configuration. When the cap 112 is moved in a lateral direction by force due to the fastening bolt 126, the motion may deform one or more of the deformable protrusions 116. The motion may further cause the cap 112 to become spaced apart from at least one configuration of the deformable protrusion 116 and/or cause at least one configuration of the protrusions 115 to shift laterally with respect to a raised portion 117 of base plate 113.

Additionally, the nut restrainer 101 illustrated in conjunction with figure 18a through figure 18b described above may further include any one or more features associated with any other figure of this disclosure. Moreover, the nut restrainer 101 illustrated in conjunction with figure 18a and figure 18b described above may further include any one or more features described in this disclosure.

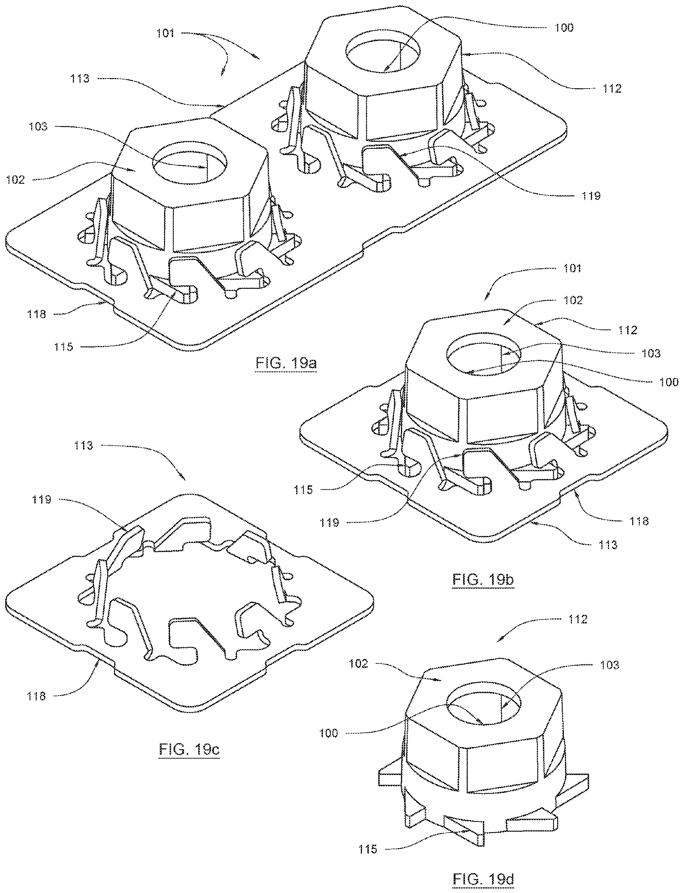

Fig. 19a shows a top perspective view of two joined-together nut restrainers comprising two caps and a common base plate of other embodiments of the disclosed technology. As shown by this figure, aspects of the disclosure may include constructions with two of the caps 112 structured and/or configured to share a common configuration of the base plate 113 having two portals. In other embodiments, more than two configurations of the caps 112 may share a common configuration of the base plate 113, such that the caps 112 may be arranged in a line and/or in a grid. In other embodiments, a plurality of the base plates 113 may be, in embodiments, structured and/or arranged to be removably and reattachably connected, such that two configurations of the base plates 113 may be connected and disconnected at least 10 times while maintaining their original respective sizes and shapes. The base plates 113 may be connectable by way of a mechanism or mechanisms such as teeth, latches, links, and/or the like. In other embodiments, the base plates 113 may be connected by a process, structure, configuration, and/or the like which cannot be reversed without changing the shape and/or size of at least one configuration of the base plate 113, such as welding.

Fig. 19b shows a top perspective view of a nut restrainer comprising a cap and a base plate of other embodiments of the disclosed technology. In this embodiment, both the base plate 113 and the cap 112 of the nut restrainer 101 may have protrusions 119 and protrusions 115 in shapes of "teeth." The protrusions 115 and the protrusions 119 may be structured and/or configured to be sized and shaped to lock together when the cap 112 is twisted in a counter-clockwise direction relative to the base plate 113 when viewed from the top. The protrusions 115 and the protrusions 119 may furthermore be structured and/or configured to be sized and shaped to remain locked together unless the mobile central portion of the cap 112 of the nut restrainer 101 is twisted in a clockwise direction relative to the base plate 113. In some aspects, the protrusions 115 and the protrusions 119 may be radial protrusions.

Fig. 19c shows a top perspective view of the base plate of Fig. 19b. Fig. 19d shows a top perspective view of the cap of Fig. 19b. In the embodiment shown, the protrusions 119 of the base plate 113 are shaped to hold the cap 112 abutted to a substrate plate 122 when the nut restrainer 101 is connected thereto. The base plate 113 may include at least one configuration of the weld location indicators 118, such as an indentation, on each side of a perimeter thereof. In other embodiments, the base plate 113 may have the weld location indicators 118 within the area of the base plate 113 and/or may have a greater or fewer number of the weld location indicators 118. In some embodiments, the protrusions 119 of the base plate 113 may be structured and/or configured to be radially deformable (for example, may be flexible along a line passing through a center of the base plate 113 and through each respective one of the protrusion 119) such that the cap 112, can be moved in a lateral direction if a lateral force is imposed on a nut 120 placed therein due to the insertion of a fastening bolt 126.

The cap 112 of the nut restrainer 101, in the embodiment shown, may have a lower portion with the lower inner sidewalls 104 may be structured and/or configured to be in a shape of a cylinder and may have an upper portion with the upper inner sidewall 103 may be structured and/or configured to be in a shape of a regular hexagonal prism. A top layer 102 of the cap 112 may have a hole 100 passing through a center thereof which may be wide enough to accommodate a most elongated portion of a bolt, such as a centering bolt 125 or a fastening bolt 126, passing therethrough. The "teeth" of the protrusions 115 of the mobile central portion of the cap 112 may be structured and/or configured to extend, in the embodiment shown, from a lower part of the cap 112. In other embodiments, a height of the lower, circular portion of the cap 112 may be structured and/or configured to be equal to a height of the protrusions 115 of the cap 112.

Additionally, the nut restrainer 101 illustrated in conjunction with figure 19a through figure 19d described above may further include any one or more features associated with any other figure of this disclosure. Moreover, the nut restrainer 101 illustrated in conjunction with figure 19a through figure 19d described above may further include any one or more features described in this disclosure.

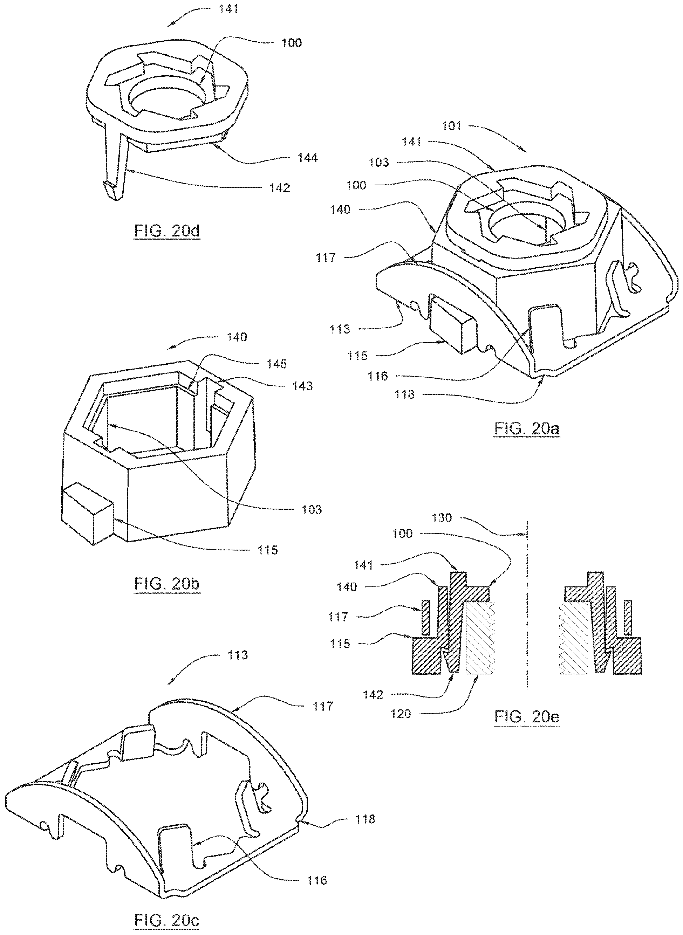

Fig. 20a shows a top perspective view of a nut restrainer comprising an attachable top, a cap body, and a base plate of other embodiments of the disclosed technology. Fig. 20b shows a top perspective view of the cap body of Fig. 20a. Fig. 20c shows a top perspective view of the base plate of Fig. 20a. Fig. 20d shows a top perspective view of the attachable top of the nut restrainer of Fig. 20a. In one or more aspects, the nut restrainer 101 may include a cap comprising a cap body 140 and an attachable top 141 that may be surrounded by, unconnected to, and/or held in place by a base plate 113. In the embodiment shown, the base plate 113 may have deformable protrusions 116, which engage four of six sides of the cap body 140. In other embodiments, the number of the deformable protrusions 116 and/or the number of sides engaged with by the deformable protrusions 116 and/or the shape of the cap body 140 may differ. When no force acts upon the cap body 140 and/or any part placed therein in a lateral direction, the deformable protrusions 116 may hold the cap 112 substantially concentric with the base plate 113. The attachable top 141 may include, for example, two configurations of barbed prongs 142 that may be inserted into channels 143 of the cap body 140, the barbed prongs 142 may engage with the cap body 140 to prevent removal of the attachable top 141. A protrusion 144 may mate with a shelf 145, preventing the deformation of the cap body 140 due to torque imposed by a nut 120 placed therein. In the embodiment shown, the protrusion 144 and the shelf 145 are hexagonal. In other embodiments the protrusion 144 and the shelf 145 may have different shapes, including in some cases, shapes which interlock.

The cap body 140 may include the protrusions 115 emanating therefrom. The base plate 113 may include raised portions 117 that may be structured and/or configured with openings corresponding to the protrusions 115 and sized to allow the protrusions 115 to pass therethrough. The raised portions 117 may be structured and/or configured to have a strength sufficient to prevent the protrusions 115 from being dislodged therefrom by a torque and/or a perpendicular force upon any part of the cap 112 and/or any part placed therein.

Fig. 20e shows an elevational cross-sectional view of the nut restrainer of Fig. 20a with a nut inserted. The attachable top 141 may be attached to the cap body 140. The tips of the barbed prongs 142, and corresponding surface of the cap body 140 may be structured and/or configured to be beveled to prevent the barbed prongs 142 from disengaging from the cap body 140 if an upward force is imposed on the attachable top 141.

Additionally, the nut restrainer 101 illustrated in conjunction with figure 20a through figure 20c described above may further include any one or more features associated with any other figure of this disclosure. Moreover, the nut restrainer 101 illustrated in conjunction with figure 20a through figure 20c described above may further include any one or more features described in this disclosure.

Accordingly, the disclosure has set forth a number of different implementations of a nut restrainer that is structured, configured, arranged, and/or the like described herein to allow for pre-placement and pre-attaching of nuts while also preserving erection tolerances by allowing the nuts to retain some lateral movement, such that a bolt may be screwed into the nut when access is only available from one side. Any one or more of the components of the nut restrainer 101 as described herein may be made of various materials including one or more metals, one or more plastic materials, one or more composite materials, one or more synthetic materials and/or the like. Additionally, the nut restrainer 101 may be manufactured using any number of manufacturing The following paragraphs E1 to E101 present a series of embodiments based on the preceding discussion.

Embodiment E1. A nut restrainer for inserting a nut within the nut restrainer and thereafter affixing the nut restrainer to a substrate plate having two sides, over a bolt hole having a radial tolerance, for subsequent installation of a bolt having a shank and a tip, from the side of the substrate plate opposite the side to which the nut restrainer is affixed, the nut restrainer comprising:
a portion of one or more materials formed to define a cavity, and including a top plane disposed away from the substrate plate, and an open end;
the cavity configured to accept insertion of a nut, with the portion of one or more materials formed to define the cavity shaped to rotationally restrain the nut, and to include at least one location from which the nut has freedom of movement in any lateral direction equal to at least two times the radial tolerance of the bolt hole;
the nut restrainer including one or more nut centering elements comprising one or more portions of removable or deformable material which extend into the cavity, and which are configured to hold the nut in a location from which the nut has freedom of movement in any lateral direction substantially equal to at least two times the radial tolerance of the bolt hole, and which may be removed or deformed so as to no longer extend into the cavity following affixment of the nut restrainer to the substrate plate, thereby allowing the nut to move in any lateral direction to accept the bolt if the bolt is inserted non-concentrically with respect to the nut;
wherein the nut restrainer is configured to prevent escape of the nut from the cavity following affixment to the substrate plate; and
wherein no portion of the nut restrainer prevents direct contact between the nut and the substrate plate, or between the shank of the bolt and either the substrate plate or one or more fastened plates.

Embodiment E2. A method of positioning the nut restrainer of embodiment E1 concentrically with the bolt hole in the substrate plate accurate to within the radial tolerance of the bolt hole, the method comprising:
inserting the nut into the nut restrainer;
placing the open end of the nut restrainer in flush contact with the substrate plate, thereby preventing removal of the nut;
inserting a bolt from a side of the substrate plate opposite the nut restrainer, through the bolt hole, and binding the bolt with the nut previously inserted into the nut restrainer, so that the bolt and the nut are in snug contact with the substrate plate;
affixing the nut restrainer to the substrate plate; and
removing the bolt from the nut and withdrawing the bolt from the bolt hole in the substrate plate.

Embodiment E3. The nut restrainer of embodiment E1, wherein the nut restrainer is configured so that the nut is visible from outside of the nut restrainer following affixment to the substrate plate.

Embodiment E4. The nut restrainer of embodiment E1, wherein the cavity defines a substantially equiangular hexagon.

Embodiment E5. The nut restrainer of embodiment E1, wherein the nut centering elements are sufficiently stiff and strong to substantially prevent movement of the nut in all lateral directions when the nut is acted on by a force in any lateral direction with a magnitude not exceeding the magnitude of the force acting on the nut due to gravity, and sufficiently flexible to deform when the nut is acted on by a force in a lateral direction due to contact between the tip of the bolt and the nut, thereby allowing the nut to move in a lateral direction within the nut restrainer to accept the bolt when the bolt is inserted non-concentrically the nut.

Embodiment E6. The nut restrainer of embodiment E1, wherein the cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate.

Embodiment E7. The nut restrainer of embodiment E6, wherein the nut restrainer includes one or more washer centering elements, the washer centering elements comprising:
one or more portions of deformable material, which extend into the cavity of the nut restrainer, and hold the washer substantially concentric with the nut restrainer; and
the washer centering elements being sufficiently stiff and strong to substantially prevent movement of the washer in all lateral directions when the washer is acted on by a force in any lateral direction with a magnitude not exceeding the magnitude of the force acting on the washer due to gravity, and sufficiently flexible to deform when the washer is acted on by a force in a lateral direction due to contact between the tip of the bolt and the washer, thereby allowing the washer to move in a lateral direction to accept the bolt if the bolt is inserted non-concentrically with respect to the washer.

Embodiment E8. The nut restrainer of embodiment E1, wherein the nut centering elements are made of one or more of foam, cork, rubber, plastic and felt, and a balance of the nut restrainer is made of metal.

Embodiment E9. The nut restrainer of embodiment E1, wherein the nut centering elements are contiguous with a balance of the nut restrainer, and the nut centering elements are configured with a deformability that is attributable to a form and proportioning of the nut centering elements.

Embodiment E10. The nut restrainer of embodiment E1, wherein the nut centering elements are attached to a balance of the nut restrainer with an adhesive.

Embodiment E11. The nut restrainer of embodiment E1, wherein affixment of the nut restrainer to the substrate plate is by means of welding.

Embodiment E12. The nut restrainer of embodiment E1, wherein the nut centering elements are attached to a balance of the nut restrainer by snapping one or more portions of material that include the nut centering elements into place.

Embodiment E13. The nut restrainer of embodiment E12, wherein the top plane includes a hole to allow the tip of the bolt to pass through the top plane after passing through the nut, the hole being shaped to bind with the one or more portions of material including the nut centering elements, and limit attachment of the one or more portions of material including the nut centering elements to a position from which the nut centering elements hold the nut in a position from which the nut has freedom of movement in any lateral direction substantially equal to at least two times the radial tolerance of the bolt hole.

Embodiment E14. The nut restrainer of embodiment E1, wherein the top plane includes a hole to allow the tip of the bolt to pass through the top plane after passing through the nut.

Embodiment E15. The nut restrainer of embodiment E1, wherein the nut restrainer includes one or more of indentations, protrusions and holes, that indicate one or more preferred locations for affixing the nut restrainer to the substrate plate.

Embodiment E16. A nut restrainer for inserting a nut within the nut restrainer and thereafter affixing the nut restrainer to a substrate plate having two sides, over a bolt hole having a radial tolerance, for subsequent installation of a bolt having a shank and a tip, from the side of the substrate plate opposite the side to which the nut restrainer is affixed, the nut restrainer comprising:
one or more rigid outer portions and a mobile central portion;
the mobile central portion formed to define a cavity, and including a top plane disposed away from the substrate plate, and an open end;
the cavity configured to accept insertion of a nut, with a material of the mobile central portion that defines the cavity shaped to rotationally restrain the nut;
the one or more rigid outer portions, which include portions of the nut restrainer that are affixed to the substrate plate, configured so that the mobile central portion has freedom of movement in any lateral direction substantially equal to at least two times the radial tolerance of the bolt hole;
the one or more rigid outer portions and the mobile central portion being connected by one or more flexible connectors, which are sufficiently stiff and strong to substantially prevent movement of the mobile central portion in all lateral directions when one or more of the nut and the mobile central portion are acted on by forces in any lateral direction with magnitudes not exceeding the magnitude of the force acting on a respective element due to gravity, and sufficiently strong to rotationally restrain the mobile central portion when the mobile central portion is acted on by a torque due to an action of tightening the bolt with the nut, and sufficiently flexible to deform when the nut is acted on by a force in a lateral direction due to contact between the tip of the bolt and the nut, thereby allowing the nut to move in a lateral direction to accept the bolt if the bolt is inserted non-concentrically with respect to the nut;
wherein the nut restrainer is configured to prevent escape of the nut from the cavity following affixment to the substrate plate; and
wherein no portion of the nut restrainer prevents direct contact between the nut and the substrate plate, or between the shank of the bolt and either the substrate plate or one or more fastened plates.

Embodiment E17. The nut restrainer of embodiment E16, wherein the one or more rigid outer portions include one or more of indentations, protrusions and holes, that indicate one or more preferred locations for affixing the nut restrainer to the substrate plate.

Embodiment E18. The nut restrainer of embodiment E16, wherein the top plane includes a hole to allow the tip of the bolt to pass through the top plane after passing through the nut.

Embodiment E19. The nut restrainer of embodiment E16, wherein affixment of the nut restrainer to the substrate plate is by means of welding.

Embodiment E20. The nut restrainer of embodiment E16, wherein the cavity defines a substantially regular hexagon.

Embodiment E21. The nut restrainer of embodiment E16, wherein the cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate.

Embodiment E22. A method of positioning the nut restrainer of embodiment E16 concentrically with the bolt hole in the substrate plate accurate to within the radial tolerance of the bolt hole, the method comprising:
inserting the nut into the nut restrainer;
placing the open end of the nut restrainer in flush contact with the substrate plate, thereby preventing removal of the nut;
inserting a bolt from a side of the substrate plate opposite the nut restrainer, through the bolt hole, and binding the bolt with the nut previously inserted into the nut restrainer, so that the bolt and the nut are in snug contact with the substrate plate;
affixing the nut restrainer to the substrate plate; and
removing the bolt from the nut and withdrawing the bolt from the bolt hole in the substrate plate.

Embodiment E23. A nut restrainer for inserting a nut within the nut restrainer and thereafter affixing the nut restrainer to a substrate plate having two faces, over a bolt hole having a radial tolerance, for subsequent installation of a bolt having a shank and a tip, from a side of the substrate plate opposite the side to which the nut restrainer is affixed, the nut restrainer comprising:
one or more rigid outer portions and a mobile central portion;
the mobile central portion formed to define a cavity, and including a top plane disposed away from the substrate plate, and an open end;
the cavity configured to accept insertion of a nut, with a material of the mobile central portion that defines the cavity shaped to rotationally restrain the nut;
the mobile central portion further having one or more radial protrusions which extend away from the cavity;
the one or more rigid outer portions, which include portions of the nut restrainer that are affixed to the substrate plate, having one or more deformable protrusions, each having a tip;
the deformable protrusions configured so that the tips of the deformable protrusions contact the mobile central portion prior to insertion of the bolt, and hold the mobile central portion in a location from which the mobile central portion has freedom of movement in any lateral direction substantially equal to at least two times the radial tolerance of the bolt hole;
the deformable protrusions further being sufficiently stiff and strong to substantially prevent movement of the mobile central portion in all lateral directions when one or more of the nut and the mobile central portion are acted on by forces in any lateral direction with magnitudes not exceeding the magnitude of the force acting on a respective element due to gravity, and being sufficiently flexible to deform when the nut is acted on by a force in a lateral direction due to contact between the tip of the bolt and the nut, thereby allowing the nut to move in a lateral direction to accept the bolt if the bolt is inserted non-concentrically with respect to the nut;
the rigid outer portions further having one or more raised elements that are free from contact with the substrate plate, a space between the raised elements and the substrate plate is structured with one or more recesses;
the recesses and the radial protrusions of the mobile central portion being configured so that the radial protrusions fit into the recesses, and so that the mobile central portion is rotationally restrained in a counter-clockwise direction when viewed in a direction proceeding from the top plane to the open end, and so that the mobile central portion is prevented from moving away from the face of the substrate plate;
wherein the nut restrainer is configured to prevent escape of the nut from the cavity following affixment to the substrate plate; and
wherein no portion of the nut restrainer prevents direct contact between the nut and the substrate plate, or between the shank of the bolt and either the substrate plate or one or more fastened plates.

Embodiment E24. The nut restrainer of embodiment E23, wherein the cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate.

Embodiment E25. A method of positioning the nut restrainer of embodiment E23 concentrically with the bolt hole in the substrate plate accurate to within the radial tolerance of the bolt hole, the method comprising:
inserting the nut into the nut restrainer;
placing the open end of the nut restrainer in flush contact with the substrate plate, thereby preventing removal of the nut;
inserting a bolt from a side of the substrate plate opposite the nut restrainer, through the bolt hole, and binding the bolt with the nut previously inserted into the nut restrainer, so that the bolt and the nut are in snug contact with the substrate plate; affixing the nut restrainer to the substrate plate; and
removing the bolt from the nut and withdrawing the bolt from the bolt hole in the substrate plate.

Embodiment E26. The nut restrainer of embodiment E23, wherein the cavity defines a substantially regular hexagon.

Embodiment E27. The nut restrainer of embodiment E23, wherein affixment of the nut restrainer to the substrate plate is by means of welding.

Embodiment E28. The nut restrainer of embodiment E23, wherein the top plane includes a hole to allow the tip of the bolt to pass through the top plane after passing through the nut.

Embodiment E29. The nut restrainer of embodiment E23, wherein the raised elements and the deformable protrusions are distinct portions of material.

Embodiment E30. The nut restrainer of embodiment E23, wherein the raised elements and the deformable protrusions comprise a same portions of material.

Embodiment E31. The nut restrainer of embodiment E23, wherein the one or more rigid outer portions are made substantially of metal, and a mobile inner portion is made substantially of plastic.

Embodiment E32. The nut restrainer of embodiment E23, wherein the one or more rigid outer portions include one or more of indentations, protrusions and holes, that indicate one or more preferred locations for affixing the nut restrainer to the substrate plate.

Embodiment E33. A nut restrainer comprising:
a baseplate with a portal therein;
a cap within said portal of said baseplate;
one or more connectors attached to at least one of said baseplate and said cap;
at least one of said connectors being configured to be movable in a lateral direction; and
at least one of said connectors being configured to restrain rotation about a vertical axis of said cap with respect to said baseplate.

Embodiment E34. The nut restrainer of embodiment E33, wherein said connectors are configured to be deformably movable in a lateral direction.

Embodiment E35. The nut restrainer of embodiment E33, wherein said cap comprises a portal extending through a top of said cap.

Embodiment E36. The nut restrainer of embodiment E33, wherein an interior profile of said cap is shaped to rotationally restrain a nut therein relative to said cap.

Embodiment E37. The nut restrainer of embodiment E36, wherein:
said baseplate is structured and arranged to abut against and be attachable to a substrate plate, said substrate plate comprising a portal extending therethrough; and
at least one of said connectors is configured to hold said cap abutted against said substrate plate.

Embodiment E38. The nut restrainer of embodiment E37, wherein said interior profile of said cap is shaped to accommodate a circular washer therein, and said circular washer spacing apart said nut and said substrate plate.

Embodiment E39. The nut restrainer of embodiment E37, wherein said baseplate, said cap, and said connectors are configured as a unitary structure, and said connectors comprise deformable flanges.

Embodiment E40. The nut restrainer of embodiment E39, wherein said deformable flanges are parallel and adjacent to said substrate plate.

Embodiment E41. The nut restrainer of embodiment E39, wherein said deformable flanges are configured to be attached at a lower extremity of said baseplate that is adjacent to said substrate plate, and said deformable flanges have a region extending vertically away from said baseplate.

Embodiment E42. The nut restrainer of embodiment E39, wherein movement of said cap in a lateral direction causes simultaneous deformation of all of said deformable flanges.

Embodiment E43. The nut restrainer of embodiment E37, wherein said cap is insertable into said portal in said baseplate.

Embodiment E44. The nut restrainer of embodiment E43, wherein movement of said cap in a lateral direction causes movement of at least one of said connectors in a lateral direction.

Embodiment E45. The nut restrainer of embodiment E43, wherein said cap is configured to be insertable into said portal of said baseplate from either side of said baseplate.

Embodiment E46. The nut restrainer of embodiment E33, wherein a top of said cap is a separate portion of material from a sidewall of said cap, said top attachable to said sidewall.

Embodiment E47. A nut restrainer implementation process comprising:
providing a nut restrainer with a baseplate having a portal therein;
providing a cap within said portal of said baseplate;
providing one or more connectors attached to at least one of said baseplate and said cap;
configuring at least one of said connectors being configured to be movable in a lateral direction; and
configuring at least one of said connectors being configured to restrain rotation about a vertical axis of said cap with respect to said baseplate.

Embodiment E48. The nut restrainer implementation process of embodiment E47 further comprising: extending a bolt through said portal in a substrate plate;
tightening said bolt with a nut;
placing said nut restrainer over said nut;
attaching said nut restrainer to said substrate plate; and
removing said bolt.

Embodiment E49. The nut restrainer implementation process of embodiment E47 further comprising: configuring the nut restrainer to allow extension of a bolt through said portal in a substrate plate;
configuring the nut restrainer to allow tightening of said bolt with a nut;
configuring the nut restrainer for placement over said nut;
configuring the nut restrainer for attaching said nut restrainer to said substrate plate; and configuring the nut restrainer for removing of said bolt.

Embodiment E50. The nut restrainer implementation process of embodiment E47, wherein said connectors are configured to be deformably movable in a lateral direction.

Embodiment E51. The nut restrainer implementation process of embodiment E47, wherein said cap comprises a portal extending through a top of said cap.

Embodiment E52. The nut restrainer implementation process of embodiment E47, wherein a top of said cap is a separate portion of material from a sidewall of said cap, said top attachable to said sidewall.

Embodiment E53. The nut restrainer implementation process of embodiment E47, wherein an interior profile of said cap is shaped to rotationally restrain a nut therein relative to said cap.

Embodiment E54. The nut restrainer implementation process of embodiment E53, wherein:
said baseplate is structured and arranged to abut against and be attachable to a substrate plate, said substrate plate comprising a portal extending therethrough; and
at least one of said connectors is configured to hold said cap abutted against said substrate plate.

Embodiment E55. The nut restrainer implementation process of embodiment E54, wherein said interior profile of said cap is shaped to accommodate a circular washer therein, and said circular washer spacing apart said nut and said substrate plate.

Embodiment E56. The nut restrainer implementation process of embodiment E54, wherein said baseplate, said cap, and said connectors are a unitary structure, and said connectors comprise deformable flanges.

Embodiment E57. The nut restrainer implementation process of embodiment E56, wherein said deformable flanges are parallel and adjacent to said substrate plate.

Embodiment E58. The nut restrainer implementation process of embodiment E56, wherein said deformable flanges are attached at a lower extremity of said baseplate that is adjacent to said substrate plate, and said deformable flanges have a region extending vertically away from said baseplate.

Embodiment E59. The nut restrainer implementation process of embodiment E56, wherein movement of said cap in a lateral direction causes simultaneous deformation of all of said deformable flanges.

Embodiment E60. The nut restrainer implementation process of embodiment E54, wherein said cap is insertable into said portal in said baseplate.

Embodiment E61. The nut restrainer implementation process of embodiment E60, wherein movement of said cap in a lateral direction causes movement of at least one of said connectors in a lateral direction.

Embodiment E62. The nut restrainer implementation process of embodiment E60, wherein said cap is configured to be insertable into said portal of said baseplate from either side of said baseplate.

Embodiment E63. A nut restrainer configured to receive a nut and be affixed to a substrate plate, the nut restrainer comprising:
one or more rigid outer portions and a mobile central portion;
the mobile central portion formed to define a cavity, and including a top plane disposed away from the substrate plate, and an open end;
the cavity configured to accept insertion of a nut, with a material of the mobile central portion that defines the cavity shaped to rotationally restrain the nut;
the mobile central portion further having one or more radial protrusions which extend away from the cavity;
the one or more rigid outer portions, which include portions of the nut restrainer that are affixed to the substrate plate, having one or more deformable protrusions, each having a tip;
the deformable protrusions configured so that the tips of the deformable protrusions maintain contact with the mobile central portion prior to insertion of a bolt, and hold the mobile central portion in a location from which the mobile central portion has freedom of movement in any lateral direction substantially equal to at least two times a radial tolerance of a bolt hole;
the deformable protrusions further being configured to be sufficiently flexible to deform when the nut is acted on by a force in a lateral direction due to contact between the tip of the bolt and the nut, thereby allowing the nut to move in a lateral direction to accept the bolt if the bolt is inserted non-concentrically with respect to the nut;
the rigid outer portions further having one or more raised elements that are free from contact with the substrate plate, a space between the raised elements and the substrate plate is structured with one or more recesses; and
the recesses and the radial protrusions of the mobile central portion being configured so that the radial protrusions fit into the recesses, and so that the mobile central portion is rotationally restrained.

Embodiment E64. The nut restrainer of embodiment E63, wherein the cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate.

Embodiment E65. The nut restrainer of embodiment E63, wherein the cavity defines a substantially regular hexagon.

Embodiment E66. The nut restrainer of embodiment E63, wherein affixment of the nut restrainer to the substrate plate is by means of welding.

Embodiment E67. The nut restrainer of embodiment E63, wherein the top plane includes a hole to allow the tip of the bolt to pass through the top plane after passing through the nut.

Embodiment E68. The nut restrainer of embodiment E63, wherein the raised elements and the deformable protrusions are distinct portions of material.

Embodiment E69. The nut restrainer of embodiment E63, wherein the raised elements and the deformable protrusions comprise a same portions of material.

Embodiment E70. The nut restrainer of embodiment E63, wherein the one or more rigid outer portions are made substantially of metal, and a mobile inner portion is made substantially of plastic.

Embodiment E71. The nut restrainer of embodiment E63, wherein the one or more rigid outer portions include one or more of indentations, protrusions and holes, that indicate one or more preferred locations for affixing the nut restrainer to the substrate plate.

Embodiment E72. A nut restrainer configured to receive a nut and be affixed to a substrate, the nut restrainer comprising:
a structure configured with a cavity, a top plane, and an open end;
the cavity configured to accept insertion of a nut;
the cavity further configured and shaped to rotationally restrain the nut and the cavity further configured to include at least one location where the nut has freedom of movement in any lateral direction equal to at least two times a radial tolerance of a bolt hole; and
nut centering elements comprising at least one portion of deformable material that extends into the cavity, the at least one portion of deformable material configured to hold the nut in a location from which the nut has freedom of movement in any lateral direction substantially equal to at least two times the radial tolerance of the bolt hole,
wherein the nut restrainer is configured to prevent escape of the nut from the cavity following affixment to a substrate plate.

Embodiment E73. The nut restrainer of embodiment E72, wherein the nut restrainer is configured so that the nut is visible from outside of the nut restrainer following affixment to the substrate plate.

Embodiment E74. The nut restrainer of embodiment E72, wherein the cavity defines a substantially equiangular hexagon.

Embodiment E75. The nut restrainer of embodiment E72, wherein the nut centering elements are configured to be sufficiently flexible to deform when the nut is acted on by a force in a lateral direction due to contact between a tip of a bolt and the nut, thereby allowing the nut to move in a lateral direction within the nut restrainer to accept the bolt when the bolt is inserted non-concentrically the nut.

Embodiment E76. The nut restrainer of embodiment E72, wherein the cavity is configured to accept insertion of a washer in addition to accepting insertion of the nut, and to provide the washer a freedom of movement in any lateral direction at least equal to the radial tolerance of the bolt hole, and to prevent escape of the washer following affixment to the substrate plate.

Embodiment E77. The nut restrainer of embodiment E76, further comprising:
at least one washer centering element, the at least one washer centering element comprising:
at least one portion of deformable material configured to extend into the cavity of the nut restrainer and hold the washer substantially concentric with the nut restrainer; and
the at least one washer centering elements being configured to be sufficiently flexible to deform when the washer is acted on by a force in a lateral direction due to contact between a tip of a bolt and the washer, thereby allowing the washer to move in a lateral direction to accept the bolt if the bolt is inserted non-concentrically with respect to the washer.

Embodiment E78. The nut restrainer of embodiment E72, wherein:
the nut centering elements are made of at least one of the following: foam, cork, rubber, plastic and felt; and
a balance of the nut restrainer being made of metal.

Embodiment E79. The nut restrainer of embodiment E72, wherein the nut centering elements are attached to the nut restrainer with an adhesive.

Embodiment E80. The nut restrainer of embodiment E72, wherein the structure is configured for affixment to the substrate plate.

Embodiment E81. The nut restrainer of embodiment E72, wherein the structure is configured for affixment to the substrate plate by welding.

Embodiment E82. The nut restrainer of embodiment E72, wherein the nut centering elements are configured to be attached to the structure with a snapping mechanism configured to snap at least one portion of material that includes the nut centering elements into place.

Embodiment E83. The nut restrainer of embodiment E82, wherein the top plane is structured and configured with a hole to allow a tip of a bolt to pass through the top plane after passing through the nut, the hole being configured and shaped to bind with the at least one portion of material including the nut centering elements, and limit attachment of the at least one portion of material including the nut centering elements to a position from which the nut centering elements hold the nut in a position from which the nut has freedom of movement in any lateral direction substantially equal to at least two times the radial tolerance of the bolt hole.

Embodiment E84. The nut restrainer of embodiment E72, wherein the top plane is structured and configured with a hole to allow a tip of a bolt to pass through the top plane after passing through the nut.

Embodiment E85. The nut restrainer of embodiment E72, wherein the nut restrainer includes at least one of the following: indentations configured to indicate preferred locations for affixing the nut restrainer to the substrate plate, protrusions configured to indicate at least one preferred locations for affixing the nut restrainer to the substrate plate, and holes configured to indicate at least one preferred locations for affixing the nut restrainer to the substrate plate.

Embodiment E86. A nut restrainer implementation process comprising:
configuring a nut restrainer with a structure comprising a cavity, a top plane, and an open end;
configuring the cavity to accept insertion of a nut;
configuring the cavity to rotationally restrain the nut and the cavity further configured to include at least one location where the nut has freedom of movement in any lateral direction equal to at least two times a radial tolerance of a bolt hole; and
configuring the nut restrainer with nut centering elements with at least one portion of deformable material that extends into the cavity, the at least one portion of deformable material configured to hold the nut in a location from which the nut has freedom of movement in any lateral direction substantially equal to at least two times the radial tolerance of the bolt hole,
wherein the nut restrainer is configured to prevent escape of the nut from the cavity following affixment to a substrate plate.

Embodiment E87. The nut restrainer implementation process of embodiment E86, further comprising configuring the nut restrainer so that the nut is visible from outside of the nut restrainer following affixment to the substrate plate.

Embodiment E88. The nut restrainer implementation process of embodiment E86, wherein the cavity defines a substantially equiangular hexagon.

Embodiment E89. The nut restrainer implementation process of embodiment E86, further comprising configuring the nut centering elements to be sufficiently flexible to deform when the nut is acted on by a force in a lateral direction due to contact between a tip of a bolt and the nut, thereby allowing the nut to move in a lateral direction within the nut restrainer to accept the bolt when the bolt is inserted non-concentrically the nut.

Embodiment E90. The nut restrainer implementation process of embodiment E86, further comprising configuring the cavity to accept insertion of a washer in addition to accepting insertion of the nut, and to provide the washer a freedom of movement in any lateral direction at least equal to the radial tolerance of the bolt hole, and to prevent escape of the washer following affixment to the substrate plate.

Embodiment E91. The nut restrainer implementation process of embodiment E90, further comprising:
providing at least one washer centering element, the at least one washer centering element comprising:
at least one portion of deformable material configured to extend into the cavity of the nut restrainer and hold the washer substantially concentric with the nut restrainer; and
the at least one washer centering elements being configured to be sufficiently flexible to deform when the washer is acted on by a force in a lateral direction due to contact between a tip of a bolt and the washer, thereby allowing the washer to move in a lateral direction to accept the bolt if the bolt is inserted non-concentrically with respect to the washer.

Embodiment E92. The nut restrainer implementation process of embodiment E86, wherein:
the nut centering elements are made of at least one of the following: foam, cork, rubber, plastic and felt; and
a balance of the nut restrainer being made of metal.

Embodiment E93. The nut restrainer implementation process of embodiment E86, further comprising attaching the nut centering elements to the nut restrainer with an adhesive.

Embodiment E94. The nut restrainer implementation process of embodiment E86, further comprising affixing the structure to the substrate plate.

Embodiment E95. The nut restrainer implementation process of embodiment E86, further comprising affixing welding the structure to the substrate plate.

Embodiment E96. The nut restrainer implementation process of embodiment E86, wherein the nut centering elements are configured to be attached to the structure with a snapping mechanism configured to snap at least one portion of material that includes the nut centering elements into place.

Embodiment E97. The nut restrainer implementation process of embodiment E96, wherein the top plane is structured and configured with a hole to allow a tip of a bolt to pass through the top plane after passing through the nut, the hole being configured and shaped to bind with the at least one portion of material including the nut centering elements, and limit attachment of the at least one portion of material including the nut centering elements to a position from which the nut centering elements hold the nut in a position from which the nut has freedom of movement in any lateral direction substantially equal to at least two times the radial tolerance of the bolt hole.

Embodiment E98. The nut restrainer implementation process of embodiment E86, wherein the top plane is structured and configured with a hole to allow a tip of a bolt to pass through the top plane after passing through the nut.

Embodiment E99. The nut restrainer implementation process of embodiment E86, wherein the nut restrainer includes at least one of the following: indentations configured to indicate preferred locations for affixing the nut restrainer to the substrate plate, protrusions configured to indicate at least one preferred locations for affixing the nut restrainer to the substrate plate, and holes configured to indicate at least one preferred locations for affixing the nut restrainer to the substrate plate.

Embodiment E100. The nut restrainer implementation process of embodiment E86 further comprising:
inserting the nut into the nut restrainer;
placing the open end of the nut restrainer in flush contact with the substrate plate, thereby preventing removal of the nut;
inserting a bolt from a side of the substrate plate opposite the nut restrainer, through the bolt hole, and binding the bolt with the nut previously inserted into the nut restrainer, so that the bolt and the nut are in snug contact with the substrate plate;
affixing the nut restrainer to the substrate plate; and
removing the bolt from the nut and withdrawing the bolt from the bolt hole in the substrate plate.

Embodiment E101. The nut restrainer implementation process of embodiment E86 further comprising:
configuring the nut restrainer for receiving the nut;
configuring the nut restrainer for placing the open end of the nut restrainer in flush contact with the substrate plate, thereby preventing removal of the nut;
configuring the nut restrainer for inserting a bolt from a side of the substrate plate opposite the nut restrainer, through the bolt hole, and binding the bolt with the nut previously inserted into the nut restrainer, so that the bolt and the nut are in snug contact with the substrate plate;
configuring the nut restrainer for affixing to the substrate plate; and
configuring the nut restrainer for removing the bolt from the nut and withdrawing the bolt from the bolt hole in the substrate plate.

techniques including machining, molding, three-dimensional printing, and/or the like.

For purposes of this disclosure, the term "substantially" is defined as "at least 95% of" the term which it modifies, except in the case of the phrase "Substantially concentric". "Substantially concentric" is defined as "having a deviation from perfect concentricity within 5% thereof."

For purposes of this disclosure, the term "nearly concentric" is defined as "concentric to within a dimension equal to the difference in radii of a substrate hole, and the shank of a bolt inserted therein."

Any device or aspect of the technology can "comprise" or "consist of" the item it modifies, whether explicitly written as such or otherwise.

When the term "or" is used, it creates a group which has within either term being connected by the conjunction as well as both terms being connected by the conjunction.

While the disclosed technology has been disclosed with specific reference to the above embodiments, a person having ordinary skill in the art will recognize that changes can be made in form and detail without departing from the spirit and the scope of the disclosed technology. The described embodiments are to be considered in all respects only as illustrative and not restrictive. All changes that come within the meaning and range of equivalency of the claims are to be embraced within their scope. Combinations of any of the methods and apparatuses described hereinabove are also contemplated and within the scope of the invention.

## Claims

1. A nut restrainer comprising:
a baseplate with a portal therein;
a cap within said portal of said baseplate;
one or more connectors attached to at least one of said baseplate and said cap;
at least one of said connectors being configured to be movable in a lateral direction; and
at least one of said connectors being configured to restrain rotation about a vertical axis of said cap with respect to said baseplate.

2. The nut restrainer of claim 1, wherein said connectors are configured to be deformably movable in a lateral direction.

3. The nut restrainer of claim 1, wherein said cap comprises a portal extending through a top of said cap.

4. The nut restrainer of claim 1, wherein an interior profile of said cap is shaped to rotationally restrain a nut therein relative to said cap.

5. The nut restrainer of claim 4, wherein:
said baseplate is structured and arranged to abut against and be attachable to a substrate plate, said substrate plate comprising a portal extending therethrough; and
at least one of said connectors is configured to hold said cap abutted against said substrate plate.

6. The nut restrainer of claim 5, wherein said interior profile of said cap is shaped to accommodate a circular washer therein, and said circular washer spacing apart said nut and said substrate plate.

7. The nut restrainer of claim 5, wherein said baseplate, said cap, and said connectors are configured as a unitary structure, and said connectors comprise deformable flanges.

8. The nut restrainer of claim 7, wherein said deformable flanges are parallel and adjacent to said substrate plate.

9. The nut restrainer of claim 7, wherein said deformable flanges are configured to be attached at a lower extremity of said baseplate that is adjacent to said substrate plate, and said deformable flanges have a region extending vertically away from said baseplate.

10. The nut restrainer of claim 7, wherein movement of said cap in a lateral direction causes simultaneous deformation of all of said deformable flanges.

11. The nut restrainer of claim 5, wherein said cap is insertable into said portal in said baseplate.

12. The nut restrainer of claim 11, wherein movement of said cap in a lateral direction preferably causes movement of at least one of said connectors in a lateral direction; wherein said cap is optionally configured to be insertable into said portal of said baseplate from either side of said baseplate; and wherein a top of said cap is optionally a separate portion of material from a sidewall of said cap, said top attachable to said sidewall.

13. A nut restrainer implementation process for the nut restrainer of claim 1 comprising:
providing a nut restrainer with a baseplate having a portal therein;
providing a cap within said portal of said baseplate;
providing one or more connectors attached to at least one of said baseplate and said cap;
configuring at least one of said connectors being configured to be movable in a lateral direction; and
configuring at least one of said connectors being configured to restrain rotation about a vertical axis of said cap with respect to said baseplate.
